(19) Europäisches Patentamt / European Patent Office / Office européen des brevets

(11) **EP 3 365 891 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
**G06F 8/41** *(2018.01)*     **G06F 8/36** *(2018.01)*
**G10L 25/48** *(2013.01)*     **G10L 15/22** *(2006.01)*
**G06F 8/33** *(2018.01)*

(21) Anmeldenummer: **17720367.6**

(22) Anmeldetag: **06.04.2017**

(86) Internationale Anmeldenummer:
**PCT/EP2017/058239**

(87) Internationale Veröffentlichungsnummer:
**WO 2017/186469 (02.11.2017 Gazette 2017/44)**

(54) **SPRACHGESTEUERTES SYSTEM**

VOICE-CONTROLLED SYSTEM

SYSTÈME À COMMANDE VOCALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2016 DE 102016107892**
**17.08.2016 DE 102016115243**

(43) Veröffentlichungstag der Anmeldung:
**29.08.2018 Patentblatt 2018/35**

(73) Patentinhaber: **Amri, Masoud**
**10717 Berlin (DE)**

(72) Erfinder: **Amri, Masoud**
**10717 Berlin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**US-A1- 2008 052 672     US-B1- 6 374 226**

• **MICHAEL F MCTEAR: "Spoken dialogue technology", ACM COMPUTING SURVEYS, ACM, NEW YORK, NY, US, US, Bd. 34, Nr. 1, 1. März 2002 (2002-03-01), Seiten 90-169, XP058087123, ISSN: 0360-0300, DOI: 10.1145/505282.505285**

**Beschreibung**

Die Erfindung betrifft ein Verfahren zum Steuern oder Programmieren eines Systems unter Verwendung natürlicher Sprache sowie ein entsprechend eingerichtetes System.

**Technologischer Hintergrund**

Im Zusammenhang mit technischen Systemen, die in menschlicher Umgebung operieren und die mit Menschen interaktiv kommunizieren, treten Problemstellungen auf, deren Komplexität keine allgemeine Lösung auf der Grundlage einfacher Algorithmen zulassen. Ein Beispiel wäre hier die Steuerung humanoider Roboter. Die auftretenden technischen Probleme und die Menge von Lösungsmöglichkeiten zum Umgang mit diesen Problemen sind so umfangreich, dass sie nur durch die Beteiligung einer großen Gruppe von Experten zu bewältigen sind. Sprachbasierte Steuerung technischer Systeme und technischer Anwendungen sind an sich bekannt, beispielsweise im Zusammenhang mit Applikationen auf mobilen Endgeräten oder bei der Robotersteuerung.

Auch Verfahren zum Programmieren in natürlicher Sprache sind seit vielen Jahren Gegenstand von Forschung und Entwicklung, insbesondere im Hinblick auf eine Mensch-Maschine-Kommunikation. Es soll auch programmiertechnisch nicht besonders geschulten Anwendern die Möglichkeit gegeben werden, technische Systeme mittels natürlicher Sprache zu steuern. Probleme ergeben sich dabei vielfach dadurch, dass natürliche Sprache mehrdeutig ist und ein Verständnis oftmals auf Kontextinformationen beruht, die nicht immer explizit oder unmittelbar vorliegen. Weiterhin denken Menschen eher prozedural, während aktuelle Software derzeit eher objektorientiert ist, was für einen gewöhnlichen Anwender eher schwer zu fassen ist.

Aufgabe der vorliegenden Erfindung ist es, vorstehend genannten Problemen Rechnung zu tragen und eine Steuerung oder Programmierung technischer Systeme mittels natürlicher Sprache weiter zu verbessern und zu vereinfachen

Das Dokument "Spoken dialogue technology" von Michael F. Mctear, ISSN: 0360-0300, befasst sich mit einem System, dass einem Benutzer die Interaktion mit computergestützten Anwendungen wie Datenbanken und Expertensystemen unter Verwendung natürlicher gesprochener Sprache ermöglicht.

Das Patentdokument US 6 374 226 B1 bezieht sich auf ein Verfahren zur Sprachsteuerung eines Programms, z.B. eine Email verschicken unter Verwendung natürlicher gesprochener Sprache.

**Zusammenfassung der Erfindung**

Diese Aufgabe wird durch ein Verfahren und mit den Merkmalen der nebengeordneten Ansprüche gelöst. Vorteilhafte Ausgestaltungen und Weiterbildungen sind in den abhängigen Ansprüchen angegeben.

Die vorliegende Erfindung basiert maßgeblich auf einer spezifischen Datenstruktur, die im Zusammenhang mit der vorliegenden Erfindung als Zeichenketten-Programmcode-Komponente bezeichnet wird. Diese Datenstruktur umfasst zum einen eine Definitionszeichenkette, die einen Ausdruck in natürlicher Sprache umfasst.

Zum anderen umfasst die Zeichenketten-Programmcode-Komponente ein der Definitionszeichenkette eindeutig zugeordnetes Programmcodesegment, welches eine dem Ausdruck in natürlicher Sprache zugeordnete Funktionalität implementiert.

Die Definitionszeichenkette und das Programmcodesegment sind untrennbar miteinander gekoppelt und bilden eine funktionale Einheit. Das Programmcodesegment implementiert quasi die Semantik der Definitionszeichenkette, d.h. dasjenige, was der Ausdruck in natürlicher Sprache vorgibt.

Der Begriff "Ausdruck in natürlicher Sprache" soll im Zusammenhang mit der vorliegenden Erfindung dahingehend verstanden werden, dass der Ausdruck ein oder mehrere Wörter in natürlicher Sprache umfasst. Der Ausdruck kann dabei lediglich ein oder mehrere Wörter in ihrer Grundform umfassen. Bevorzugt umfasst der Ausdruck aber einen grammatikalisch korrekten Satz in natürlicher Sprache. Zwischenformen sind ebenfalls möglich.

Eine solche Datenstruktur, d.h. eine erfindungsgemäße Zeichenketten-Programmcode-Komponente, stellt eine abgeschlossene, im hohen Maße gekapselte und funktionale Einheit bereit. Die innere Implementierung der Zeichenketten-Programmcode-Komponente nach außen kann verborgen werden. Wie nachfolgend im Detail beschrieben, kann die Zeichenketten-Programmcode-Komponente auf einfache Weise, beispielsweise mittels Plug-and-Play, in ein System integriert werden und mittels natürlicher Sprache aufgerufen werden. Auf diese Weise kann das System durch Dritte beliebig erweitert und ergänzt werden. Die Notwendigkeit einer Spezifikation der Zeichenketten-Programmcode-Komponente beschränkt sich auf ein Minimum. Zur Programmierung des Programmcodesegments können beispielsweise gängige Programmiersprachen, wie Java oder C++, vorgesehen werden.

Eine bevorzugte Ausführungsform eines Verfahrens zum Steuern eines Systems mittels natürlicher Sprache umfasst daher insbesondere den Schritt des Bereitstellens einer Mehrzahl von vorstehend beschriebenen Zeichenketten- Programmcode-Komponente in dem System.

Gemäß einer bevorzugten Ausführungsform der Erfindung ist zumindest eine aus einer Mehrzahl von vorstehend beschriebenen Zeichenketten-Programmcode-Komponenten dahingehend weitergebildet, eine Parametereingabe zu unterstützen, mittels welcher die durch das Programmcodesegment dieser Zeichenketten-Programmcode-Komponente bereitgestellte Funktionalität spezifiziert werden kann.

Mit anderen Worten muss die Funktionalität, welche ein Programmcodesegment einer Zeichenketten-Programmcode-Komponente implementiert, nicht fix und unveränderlich sein, sondern kann mittels Parametereingabe spezifiziert werden. Eine durch das Programmcodesegment beispielsweise implementierte Grundfunktionalität zum Auslesen eines Datums aus einer Datenbank kann mittels Parameter dahingehend spezifiziert werden, welche Tabelle, und in der Tabelle, welche Spalten ausgelesen werden sollen.

Genauer kann diese zumindest eine Zeichenketten-Programmcode-Komponenten eine eigene Methode zur Parametereingabe bereitstellen. Wird diese Zeichenketten-Programmcode-Komponente von einer Steuereinrichtung des Systems verarbeitet, so wird die Methode zur Parametereingabe aufgerufen und die Zeichenketten-Programmcode-Komponente übernimmt quasi das Erfassen der erforderlichen Parameter selbst.

Gemäß einer alternativen Ausführungsform kann eine der Zeichenketten-Programmcode-Komponenten aus der Mehrzahl der Zeichenketten-Programmcode-Komponenten dadurch eingerichtet sein, eine Parametereingabe zu unterstützen, dass ein Anteil der Definitionszeichenkette dieser Zeichenketten-Programmcode-Komponente für die Steuereinrichtung des Systems, welche die Zeichenketten-Programmcode-Komponente verarbeitet, erkennbar als zu spezifizierender Parameter gekennzeichnet ist. Hierzu können in der Softwaretechnik grundsätzlich bekannte Technologien verwendet werden, die mit den Begriffen "Markierung" oder "Annotation" verbunden sind. Die Erfassung des oder der Parameter erfolgt in diesem Fall durch die Steuereinrichtung, auf Basis einer spezifischen Kennzeichnung in der Definitionszeichenkette der Zeichenketten-Programmcode-Komponente. Es versteht sich, dass sich die Realisierung des in diesem Dokument verwendeten Begriffes "Markierung" nicht nur auf die in der Softwaretechnik grundsätzlich bekannten Technologien, wie Annotation, XML, JSON und dergleichen, beschränkt. Hierzu können neue Technologien verwendet werden, die den gleichen Zweck der "Markierung" erfüllen. Dazu gehört beispielweise die Verwendung von reservierten Schlüsselwörtern im Quellcode einer Programmiersprache und durch den entsprechenden Compiler bzw. Interpreter.

Gemäß einer Ausführungsform kann einem Parameter, mittels dessen die durch das Programmcodesegment einer Zeichenketten-Programmcode-Komponente bereitgestellte Funktionalität spezifiziert werden kann, zusätzlich ein frei definierbarer Parametertyp zugeordnet werden. Ein solcher Parametertyp kann insbesondere verschieden sein von einem aus herkömmlichen Programmiersprachen bekannten primitive Typen, wie z.B. String, Integer, Float, Date, Boolean, etc. Parametertypen können in diesem Zusammenhang insbesondere Maßeinheiten oder dergleichen sein. Auch frei definierbare Kategorien, wie z.B. "Gemüse", können als Parametertyp vorgesehen sein. Es ist weiterhin möglich, einen Parametertyp zu definieren und zuzuordnen, der aus einer Kombination eines oder mehrerer "Standardparameter" und eines oder mehrerer frei definierbarer Parameter besteht. Für einen Parameter, der eine Temperatur angibt, kann z.B. ein Parametertyp definiert werden, der eine Gleitkommazahl (Float) und eine konkrete Maßeinheit (Grad Celsius) umfasst.

Die Tatsache, dass die Parametererfassung seitens des Systems - oder vorzugsweise seitens der Zeichenketten-Programmcode-Komponente selbst, mittels der vorstehend beschriebenen Methode zu Parametereingabe-, vorgenommen wird, hat den weiteren Vorteil, dass Falscheingaben, z.B. hinsichtlich des Typs oder Werts des Parameters, unmittelbar bei Eingabe überprüft werden können. Das Vorsehen von spezifischen, frei definierbaren Parametertypen kann hierbei hilfreich sein, z.B. wenn ein Parameter eine Zahl darstellt, die dazugehörige Maßeinheit, die als zusätzlicher Parametertyp zugeordnet werden kann, aber wesentlich ist (z.B. "m" oder "km"). Ein Fehler aufgrund einer fehlerhaften Parametereingabe, der ansonsten erst später, beispielsweise zur Laufzeit, aufgetreten wäre, kann dadurch frühzeitig erkannt und abgefangen werden. Eine Parametereingabe, -erfassung und -prüfung mittels einer spezifischen Methode einer Zeichenketten-Programmcode-Komponente ist besonders vorteilhaft. Die Methode kann spezifisch auf den Programmcode der Zeichenketten-Programmcode-Komponente angepasst werden; das System muss in dieser Hinsicht nicht angepasst werden. Jeder Programmierer kann die der entsprechenden Zeichenketten-Programmcode-Komponente angepasste Methode zur Parametereingabe hinzufügen und spezifisch auf die Anforderungen des Programmcodes der entsprechenden Zeichenketten-Programmcode-Komponente anpassen.

Das Vorsehen eines zusätzlichen, frei definierbaren Parametertyps hat einen weiteren Vorteil: Es wird dadurch möglich, dass verschiedene Parameter, denen jeweils verschiedene Parametertypen zugeordnet sind, in beliebiger Reihenfolge eingegeben werden können. Eine korrekte Zuordnung kann dann, allein anhand des Parametertyps, seitens der Methode zur Parametereingabe bzw. seitens des Systems erfolgen.

Zur Prüfung eines Parametertyps bei der Eingabe können nachstehend noch genauer beschriebene Pattern-Matching-Verfahren verwendet werden, welche allgemein beim Vergleichen einer Eingabezeichenkette mit einer Definitionszeichenkette einer Zeichenketten-Programmcode-Komponente zum Einsatz kommen.

Gemäß einer bevorzugten Ausführungsform kann eine durch das Programmcodesegment zumindest einer der Zeichenketten-Programmcode-Komponenten aus der Mehrzahl der Zeichenketten-Programmcode-Komponenten bereitgestellte Funktionalität einen Rückgabewert liefern. Rückgabewerte können einfache logische oder numerische Werte, Zeichenketten oder dergleichen sein, aber auch komplexe Strukturen oder gar Funktionalitäten.

Ein solcher Rückgabewert kann mit einer Markierung in natürlicher Sprache markiert oder annotiert werden und seitens des Systems in einem eigens dafür vorgesehenen Speicherbereich gespeichert werden. Die in diesem Bereich gespeicherten Werte repräsentieren in gewisser Weise eine Art Historie oder Gedächtnis. Aufgrund der Markierung kann dann seitens einer Zeichenketten-Programmcode-Komponente in einfacher Weise, natürlichsprachlich, auf gespeicherte Rückgabewerte in eindeutiger Weise zurückgegriffen werden. Es besteht somit die Möglichkeit, Kontext zu erzeugen, zu speichern und auf einfache und eindeutige Weise zu verwenden.

Einem Rückgabewert kann, ebenso wie einem Parameter, ein frei definierbarer Rückgabewerttyp zugeordnet werden, welcher den Rückgabewert z.B. bezüglich einer zugeordneten Maßeinheit charakterisiert.

Wie nachstehend mit Bezug zu Kontrollstrukturen noch genauer beschrieben, kann eine zweite Zeichenketten-Programmcode-Komponente auf den Rückgabewert einer ersten Zeichenketten-Programmcode-Komponente zugreifen, insbesondere als Parameter zum Spezifizieren der durch das Programmcodesegment der zweiten Zeichenketten-Programmcode-Komponente bereitgestellten Funktionalität. Besonders bevorzugt kann diese Vorgehensweise im Zusammenhang mit bedingten Anweisungen verwendet werden, die auf Rückgabewerte früherer Zeichenketten-Programmcode-Komponenten zugreifen können.

Gemäß einer ersten bevorzugten Ausführungsform ist das System dabei eingerichtet, beim Empfangen einer Eingabezeichenkette, welche in der Regel einen Ausdruck in natürlicher Sprache umfasst, falls die Eingabezeichenkette gemäß einem vorgegebenen Ähnlichkeitsmaß eine vorgegebene Ähnlichkeit zu der Definitionszeichenkette der Zeichenketten-Programmcode-Komponente aufweist, die durch das Programmcodesegment implementierte Funktionalität auszuführen. Mit einfachen Worten kann die Funktionalität der Zeichenketten-Programmcode-Komponente dadurch aufgerufen werden, dass das System eine natürlichsprachliche Eingabe empfängt, die im Wesentlichen der Definitionszeichenkette der Zeichenketten-Programmcode-Komponente entspricht.

Als Ähnlichkeitsmaß zum Vergleichen einer Eingabezeichenkette mit der Definitionszeichenkette der Zeichenketten-Programmcode-Komponente können im Stand der Technik bekannte Ähnlichkeitsmaße verwendet werden. Gleiches gilt für ein Verfahren zum Vergleichen einer Eingabezeichenkette mit der Definitionszeichenkette; hierfür sind in Stand der Technik zahlreiche Verfahren bekannt, beispielsweise herkömmliche Pattern-Matching-Verfahren. Die vorgegebene Ähnlichkeit, die beispielsweise mittels eines numerischen Wertes zwischen 0 und 1 in Abhängigkeit des verwendeten Ähnlichkeitsmaßes angegeben werden kann, kann abhängig davon variieren, auf welche Weise die Eingabezeichenkette von dem System erlangt worden ist. Zu unterscheiden sind hierbei beispielsweise die Eingabe mittels einer Spracheingabe und Umwandlung in eine Zeichenkette oder die direkte Eingabe einer Zeichenkette, beispielsweise mittels einer Tastatur oder dergleichen. Spezifische Ähnlichkeitsmaße oder Vergleichsverfahren sind nicht Gegenstand der vorliegenden Erfindung. Im einfachsten Fall kann die Eingabezeichenkette dahingehend analysiert werden, ob sie einen vorgegebenen Anteil des Ausdrucks in natürlicher Sprache der Definitionszeichenkette exakt oder approximativ umfasst. Exakt bedeutet Wortidentität. Approximativ kann bedeutet, dass grammatikalische Abweichungen (z.B. Singular/Plural, Kasus, Beugung, etc.) zulässig sind und z.B. Satzzeichen, wie Komma oder dergleichen, ignoriert werden. Auch synonyme Worte oder Begriffe können als ähnlich angesehen werden.

Gemäß einer Ausführungsform implementiert das Programmcodesegment einer Zeichenketten-Programmcode-Komponente eine Funktionalität zum Steuern eines mit dem System gekoppelten Geräts. Ein bevorzugter Anwendungsfall ist die Steuerung von Geräten im Haushalt. Ein weiterer bevorzugter Anwendungsfall ist die Steuerung eines Roboters oder dergleichen. Es ist weiterhin vorstellbar, dass eine Informationssuche, beispielsweise in öffentlich zugänglichen Online-Bibliotheken, unter Verwendung des vorliegend beschriebenen Verfahrens vereinfacht wird.

Gemäß einer weiteren Ausführungsform implementiert die Methode zur Parametereingabe einen Dialog zwischen der Zeichenketten-Programmcode-Komponente und einem Nutzer. Alternativ kann der Dialog auch durch das Programmcodesegment der Zeichenketten-Programmcode-Komponente implementiert werden. D.h. die Methode zur Parametereingabe bzw. die Funktionalität, welche durch das Programmcodesegment implementiert wird, erzeugt eine Ausgabe in natürlicher Sprache, welche der Nutzer als Frage oder Eingabeaufforderung versteht. Der Nutzer antwortet auf diese Frage mit einer entsprechenden Eingabe, welche seitens der Methode bzw. der Funktionalität als weitere Eingabezeichenkette empfangen und verarbeitet werden kann. Dieser Frage-Antwort-Ablauf kann sich mehrfach wiederholen. Dabei kann die Zeichenketten-Programmcode-Komponente in nachstehend noch beschriebener Weise frühere Eingaben des Nutzers zum Steuern des Dialogs heranziehen. Diese Ausführungsform eignet sich beispielsweise zum Bereitstellen eines Expertensystems.

Gemäß einer ersten Variante kann der Dialog einer Parametereingabe zum Spezifizieren der seitens des Programmcodesegments implementierten Funktionalität dienen. Eine solche Parametereingabe kann dabei derart gestaltet sein, dass angegebene Parameter hinsichtlich eines erwarteten Parametertyps, Parameterwerts oder dergleichen seitens der Funktionalität oder der Methode zur Parametereingabe überprüft werden. Dadurch können Fehleingaben erkannt und verhindert werden.

Gemäß einer zweiten Variante kann der Dialog eine freie Konversation zwischen dem Nutzer und dem System unterstützen. Unter einer freien Konversation wird im vorliegenden Zusammenhang ein Wechsel zwischen einer seitens der Funktionalität an den Nutzer gerichteten Frage oder Eingabeaufforderung und einer darauf seitens des Nutzers angegebenen Antwort verstanden, wobei die Antwort weder hinsichtlich des Formats noch hinsichtlich der Semantik beschränkt ist. Die Antwort des Nutzers erfolgt durch Eingabe einer Eingabezeichenkette in das System, welches diese Eingabezeichenkette an die Funktionalität der Zeichenketten-Programmcode-Komponente weitergibt. Auch diese Eingabezeichenkette wird in der Regel einen Ausdruck in natürlicher Sprache umfassen.

Gemäß einer weiteren Ausführungsform implementiert das Programmcodesegment der Zeichenketten-Programmcode-Komponente eine Funktionalität zum Übermitteln einer Eingabezeichenkette an das System. Mit anderen Worten erzeugt die Funktionalität der Zeichenketten-Programmcode-Komponente ihrerseits eine Eingabe für das System, welche zum Aufrufen einer weiteren in dem System bereits bereitgestellten Zeichenketten-Programmcode-Komponente führen kann.

An dieser Stelle zeigt sich ein weiterer maßgeblicher Vorteil der Verwendung der erfindungsgemäßen Zeichenketten-Programmcode-Komponenten. Jede dieser Zeichenketten-Programmcode-Komponenten kann in gekapselter Weise eine spezifische Funktionalität bereitstellen, welche durch die Definitionszeichenkette der entsprechenden Zeichenketten-Programmcode-Komponente in natürlicher Sprache erkennbar und aufrufbar ist. Herkömmliche Systeme, welche eine Sprachsteuerungsfunktion ermöglichen, sind in der Regel als geschlossene Systeme angelegt und deswegen hinsichtlich ihrer Komplexität und Erweiterbarkeit stark beschränkt. Gemäß der vorliegenden Erfindung wird es hingegen ermöglicht, ein System auf einfache Weise durch Hinzufügen einer Zeichenketten-Programmcode-Komponente zu dem System zu erweitern. Komplexe technische Sachverhalte, wie beispielsweise Wissensrepräsentation oder die Steuerung von Robotern, können dadurch in verteilter Weise verbessert werden, dass interessierte Dritte einzelne Aspekte des lösenden Problems mittels spezifischer Zeichenketten-Programmcode-Komponenten, die dem System hinzugefügt werden können, bereitstellen. Diese Zeichenketten-Programmcode-Komponenten können dann in der vorstehend angedeuteten Weise von der Funktionalität bereits vorliegender Zeichenketten-Programmcode-Komponenten Gebrauch machen und stellen ihrerseits die eigene Funktionalität zum Aufruf für weitere Zeichenketten-Programmcode-Komponenten bereit. Ein entsprechendes System wird dadurch offen und auf einfache Art in beliebiger Richtung erweiterbar.

Maßgeblich verantwortlich dafür ist das Konzept der Zeichenketten-Programmcode-Komponente. Herkömmliche sprachgesteuerte Systeme erlauben in der Regel lediglich das Aufrufen bereits vorliegender Standardfunktionalitäten, beispielsweise das Starten einer Internetsuche, das Senden einer Nachricht, das Eintragen eines Termins in einen Kalender, oder dergleichen. Im Rahmen der Vorliegenden Erfindung kann hingegen eine beliebige Funktionalität, mittels des Programmcodesegments, und angepasst an die Definitionszeichenkette in natürlicher Sprache, bereitgestellt und in das System integriert werden. Während also im Stand der Technik die Sprachsteuerung lediglich die Ergonomie des jeweiligen Systems erhöht, wird vorliegend mittels des Programmcodesegments jeweils spezifisch eine Funktionalität bereitgestellt, welche die Semantik des Ausdrucks in natürlicher Sprache, der in der Definitionszeichenkette enthalten ist, programmtechnisch umsetzt. Die vorliegend vorgeschlagene Datenstruktur der Zeichenketten-Programmcode-Komponente erlaubt somit quasi eine funktionale Umsetzung der Semantik natürlichsprachlicher Ausdrücke mittels einer gekapselten, funktionalen Einheit eines natürlichsprachlichen Ausdrucks und einem diesem Ausdruck eindeutig und untrennbar zugeordneten Programmcodesegments.

Es versteht sich, dass ein Programmcodesegment einer Zeichenketten-Programmcode-Komponente gleichzeitig auch verschiedene der vorstehend beschriebenen Funktionalitäten implementieren kann. Insbesondere kann ein Programmcodesegment sowohl die Funktionalität eines Dialogs als auch die Funktionalität des Übermittelns einer Eingabezeichenkette an das System implementieren. Dies ist immer dann sinnvoll, wenn sich im Laufe des Dialoges herausstellt, dass auf Basis der empfangenen Eingaben des Nutzers das Aufrufen einer weiteren Zeichenketten-Programmcode-Komponente mit einer weiterführenden Funktionalität sinnvoll ist.

In gewisser Weise unterstützt das System indirekt eine Kommunikation verschiedener Zeichenketten-Programmcode-Komponenten mittels natürlicher Sprache. Gemäß einem ersten Aspekt kann eine Zeichenketten-Programmcode-Komponente, wie vorstehend beschrieben, eingerichtet sein, selbst eine Eingabezeichenkette mit einem Ausdruck in natürlicher Sprache an das System zu übermitteln, und damit indirekt eine weitere Zeichenketten-Programmcode-Komponente "aufrufen", deren Definitionszeichenkette hinreichend mit dieser Eingabezeichenkette übereinstimmt. Ein weiterer Aspekt einer seitens des Systems unterstützten Kommunikation verschiedener Zeichenketten-Programmcode-Komponente mittels natürlicher Sprache wird nachfolgend deutlich werden.

Konkret kann das Verfahren zum Steuern eines Systems mittels natürlicher Sprache die folgenden weiteren Schritte umfassen:

Das System empfängt eine Eingabezeichenkette. Die Eingabezeichenkette wird in der Regel einen Ausdruck in natürlicher Sprache umfassen.

In einem weiteren Schritt vergleicht das System die Eingabezeichenkette mit der Definitionszeichenkette einer in dem System bereits bereitgestellten Zeichenketten-Programmcode-Komponente gemäß dem vorgegebenen Ähnlichkeitsmaß, beispielsweise mittels eines herkömmlichen Pattern-Matching-Verfahrens.

Falls die Eingabezeichenkette eine vorgegebene Ähnlichkeit zu der Definitionszeichenkette gemäß dem vorgegebenen Ähnlichkeitsmaß aufweist, führt das System die durch das Programmcodesegment implementierte Funktionalität aus.

Gemäß einer bevorzugten Ausführungsform kann zumindest ein Anteil einer seitens des Systems empfangenen Eingabezeichenkette gespeichert werden. Dies kann zum einen die Eingabezeichenkette betreffen, welche zum Ausführen der Funktionalität der Zeichenketten-Programmcode-Komponente geführt hat. Alternativ oder zusätzlich können auch zumindest Anteile von Eingabezeichenketten gespeichert werden, welche seitens des Nutzers im Rahmen eines Dialogs mit der Zeichenketten-Programmcode-Komponente eingegeben worden sind.

Dabei kann gemäß einer Ausführungsform zumindest ein Anteil einer empfangenen Eingabezeichenkette innerhalb einer Zeichenketten-Programmcode-Komponente selbst gespeichert werden. Die Zeichenketten-Programmcode-Komponente kann dazu eine geeignete Kontextspeicher-Datenstruktur umfassen. Die in der Zeichenketten-Programmcode-Komponente gespeicherten Informationen werden dann zum Unterstützen des nachfolgenden Ausführens der durch das Programmcodesegment der Zeichenketten-Programmcode-Komponente implementierten Funktionalität durch die Zeichenketten-Programmcode-Komponente selbst ausgelesen.

In dieser Weise gespeicherte Anteile von Eingabezeichenketten können zum Unterstützen des nachfolgenden Ausführens einer Funktionalität einer Zeichenketten-Programmcode-Komponente ausgelesen werden. Auf diese Weise kann beispielsweise ein Dialog des Nutzers mit einer Zeichenketten-Programmcode-Komponente gesteuert werden, indem die Zeichenketten-Programmcode-Komponente den Verlauf des Dialogs von im Laufe des Dialogs erlangten und gespeicherten Informationen des Nutzers abhängig macht.

Alternativ können Anteile empfangener Eingabezeichenketten auch zentral, in dem System gespeichert werden. Gemäß dieser Variante kann auf diese Weise gespeicherte Informationen (bestehend aus Eingabezeichenkette, die in der Regel jeweils einen Ausdruck in natürlicher Sprache umfassen) auch von einer nachfolgend ausgeführten weiteren Zeichenketten-Programmcode-Komponente als eine Art Kontext- oder Hintergrundwissen verwendet werden. Die Anteile zentral, in dem System gespeicherter Eingabezeichenketten dienen quasi als Kurz- oder Langzeitgedächtnis des Systems, auf welches Zeichenketten-Programmcode-Komponenten jeweils in geeigneter Weise zugreifen können. Hier zeigt sich deutlich ein zweiter Aspekt einer durch das System indirekt unterstützten Kommunikation verschiedener Zeichenketten-Programmcode-Komponente mittels natürlicher Sprache: Eine Zeichenketten-Programmcode-Komponente kann zum Zeitpunkt der Ausführung der ihr zugeordneten Funktionalität auf natürlichsprachliche Information zurückgreifen, nämlich in Form von in dem System zuvor gespeicherter Eingabezeichenketten, welche während der früheren Ausführung einer Funktionalität einer weiteren Zeichenketten-Programmcode-Komponente gespeichert worden sind.

Wie bereits erwähnt, ist es möglich, dass eine durch das Programmcodesegment einer Zeichenketten-Programmcode-Komponente implementierte Funktionalität einen Rückgabewert liefert, und beispielsweise in dem System speichert, so dass nachfolgend ausgeführte Zeichenketten-Programmcode-Komponenten darauf zugreifen können. Ein solcher Rückgabewert kann einen Ausdruck in natürlicher Sprache umfassen oder mittels eines Ausdrucks in natürlicher Sprache annotiert sein. Auch numerische oder logische Werte können als Rückgabewert dienen; wenn diese Rückgabewerte natürlichsprachlich annotiert sind, kann auf einfache Weise, mittels natürlicher Sprache, darauf zurückgegriffen werden, beispielsweise als Parameter einer später aufgerufenen Zeichenketten-Programmcode-Komponente.

Gemäß einer weiteren Ausführungsform, kann eine durch das Programmcodesegment einer Zeichenketten-Programmcode-Komponente implementierte Funktionalität eingerichtet sein, aus einer empfangenen und gespeicherten Eingabezeichenkette eine Kontextinformation abzuleiten und diese Kontextinformation in dem System zu speichern. Das Ableiten der Kontextinformation kann beispielsweise mittels in der Zeichenketten-Programmcode-Komponente vorgespeicherten Daten und/oder Ableitungsregeln erfolgen. Damit wird die Kontextinformation weiteren, später ausgeführten Zeichenketten-Programmcode-Komponenten als zusätzliche Informationsgrundlage zur Verfügung gestellt. Die Kontextinformation wird bevorzugt einen Ausdruck in natürlicher Sprache umfassen. In gewisser Weise ist eine solche Zeichenketten-Programmcode-Komponente somit eingerichtet, Schlussfolgerungen aus einer Eingabezeichenkette zu ziehen.

Eine Zeichenketten-Programmcode-Komponente kann gemäß einer ersten Ausführungsform in herkömmlicherweise mittels einer geeigneten Programmiersprache erstellt werden. Diese Form der Programmierung wird in der Regel gewählt, um Basisfunktionalitäten bereitzustellen. Dazu zählen auch einfache Kontrollstrukturen, wie bedingte Anweisungen, Schleifen, etc.

D.h. das Programmcodesegment zumindest einer der Zeichenketten-Programmcode-Komponenten aus der Mehrzahl der Zeichenketten-Programmcode-Komponenten kann eine einen Ablauf eines Programms steuernde Kontrollstruktur implementieren, wie beispielsweise eine Verzweigung, eine Schleife oder eine bedingte Anweisung. Grundsätzlich werden auch solche Kontrollstrukturen mittels Programmcodesegmenten von Zeichenketten-Programmcode-Komponenten implementiert. Dadurch, dass, wie nachstehend dargelegt, Kontrollstrukturen in generischer oder aber spezifischer Weise mittels Zeichenketten-Programmcode-Komponenten implementiert werden können, kann das Verfahren zum Steuern eines Systems sowie ein nachstehend noch beschriebenes Verfahren zur Programmierung in natürlicher Sprache grundsätzlich die volle Funktionalität einer höheren Programmiersprache bereitstellen.

Das Programmcodesegment einer Zeichenketten-Programmcode-Komponente kann beispielsweise eine bedingte Anweisung implementieren, z.B. eine IF-Abfrage. Die Bedingung, welche die bedingte Anweisung definiert, kann gemäß einer ersten Variante mittels der durch das Programmcodesegment der Zeichenketten-Programmcode-Komponente implementierten Funktionalität abgefragt werden. Auf diese Weise lassen sich sehr spezifische Bedingungen auf einfache Weise implementieren und abfragen.

Dies betrifft insbesondere solche Bedingungen, die nicht oder nur schwer mittels einer eher generischen Form, z.B. "wenn a < b, dann" erfasst werden können.

Z.B eine Bedingung der Art "wenn es draußen hell ist, dann ..." kann mittels einer Zeichenketten-Programmcode-Komponente abgefragt werden, deren Programmcodesegment die Funktionalität der Abfrage eines außen angebrachten Helligkeitssensors implementiert. Zum Bereitstellen einer Kontrollstruktur auf Basis dieser Bedingung muss dann ein Codegenerator beim Erzeugen des Programmcodes für das der Programmierzeichenkette zugeordnete Programm lediglich eine IF-Abfrage erzeugen und eine Methode executeCodesegment(), welche das Programmcodesegment der Zeichenketten-Programmcode-Komponente aufruft, als Bedingung der IF-Abfrage eintragen.

Gemäß einer zweiten Variante kann, wenn das Programmcodesegment der zumindest einer Zeichenketten-Programmcode-Komponente eine bedingte Anweisung implementiert, die die bedingte Anweisung definierende Bedingung durch zumindest einen Operator und zumindest einen Operanden definiert werden. Mit anderen Worten hat die Bedingung in diesem Fall eine generische Form "Operand1 Operator Operand2", also z.B. "a < b". Da auch in diesem Fall die Kontrollstruktur, also z.B. eine IF-Abfrage, durch eine Zeichenketten-Programmcode-Komponente bereitgestellt wird, können die Operanden und der Operator als Parameter angesehen werden, welche während eines Programmierens in natürlicher Sprache in nachstehend noch allgemein beschriebener Weise erfasst werden können. Dies kann insbesondere mittels der bereits beschriebenen spezifischen Methode zur Parametererfassung geschehen, welche durch die Zeichenketten-Programmcode-Komponente bereitgestellt wird. Diese Methode kann beispielsweise beliebige numerische Operanden erfassen und beliebige gängige Operatoren zur Auswahl vorschlagen. Wie nachfolgend noch genauer dargestellt, können als Operanden auch Rückgabewerte früherer Zeichenketten-Programmcode-Komponenten ausgewählt werden.

Es versteht sich, dass mittels Zeichenketten-Programmcode-Komponenten nicht lediglich IF-Abfragen implementiert werden können, sondern beliebige andere bedingte Kontrollstrukturen, wie z.B. Schleifen ("while", "for each", etc.). Im Unterschied zu IF-Abfragen wird im Zusammenhang von Schleifen-Kontrollstrukturen nach der Ausführung des Schleifenblocks die Schleifenbedingung erneut geprüft. Falls diese weiterhin erfüllt ist, erfolgt ein weiterer Schleifendurchlauf. Es ist möglich, dass die Schleifenbedingung nach einem oder mehreren Schleifendurchläufen nicht mehr erfüllt ist, beispielsweise dann, wenn Funktionalitäten von innerhalb des Schleifenblockes aufgerufenen Zeichenketten-Programmcode-Komponenten einen oder mehrere Werte verändern, welche im Zusammenhang mit der Schleifenbedingung geprüft werden. Eine Veränderung zumindest eines solchen Wertes kann auch durch die Funktionalität der Zeichenketten-Programmcode-Komponente erfolgen, welche die Schleife implementiert, beispielsweise durch Hochzählen eines Schleifenzählers. Die allgemeine Form einer Schleife kann z.B. wie folgt implementiert werden:

```
Loop loop_1 = new Loop();
while (loop_1.excecuteCodesegment() ) {
    // hier wird durch Codegenerator der
    // Source Code anderer Satzkomponenten eingetragen.
}
```

Die Klasse "Loop" ist dabei eine konkrete Implementierung einer Zeichenketten-Programmcode-Komponente zur Realisierung einer Schleife und kann verschiedene Variationen von Schleifen, wie z.B. "do while"-, "repeat"-, "for each"-Schleifen und dergleichen realisieren.

Programmieren in natürlicher Sprache mittels Zeichenketten-Programmcode-Komponenten , wie nachstehend noch im Detail erläutert, ermöglicht in analoger Weise einen ergebnisgesteuerten Ablauf. D.h. auch so genannte "Event-Listener" (Ereignisbehandlungsroutinen) können mittels Zeichenketten-Programmcode-Komponenten dargestellt werden. Gleiches gilt für eine parallele Verarbeitung von verschiedenen Abläufen.

Wie nachfolgend dargelegt, bietet die vorliegende Erfindung weiterhin die Möglichkeit, allein mittels natürlicher Sprache zu Programmieren, d.h. auf Basis bereits vorliegender Zeichenketten-Programmcode-Komponenten weitere neue Zeichenketten-Programmcode-Komponenten zu erzeugen. Auf diese Weise wird quasi eine neuartige Programmierung mittels natürlicher Sprache ermöglicht, die praktisch kaum Programmiererfahrung erfordert und somit für ein breites Spektrum an Anwendern offen ist. In Kombination mit dem grundsätzlichen Konzept der Zeichenketten-Programmcode-Komponente wird dadurch die Erweiterung bestehender Systeme zusätzlich vereinfacht.

Gemäß einer Ausführungsform umfasst ein Verfahren zum Programmieren in natürlicher Sprache die folgenden Schritte:

Es wird eine Mehrzahl von Zeichenketten-Programmcode-Komponenten der vorstehend beschriebenen Art bereitgestellt, d.h. eine Zeichenketten-Programmcode-Komponente aus der Mehrzahl der Zeichenketten-Programmcode-Komponenten umfasst dabei jeweils eine Definitionszeichenkette, die einen Ausdruck in natürlicher Sprache umfasst, und ein der Definitionszeichenkette eindeutig zugeordnetes Programmcodesegment, welches eine dem Ausdruck in natürlicher Sprache zugeordnete Funktionalität implementiert.

In einem weiteren Schritt wird eine Programmierzeichenkette in natürlicher Sprache in ein System eingegeben, welches eingerichtet ist, die Mehrzahl der Zeichenketten-Programmcode-Komponenten zu speichern und zu verarbeiten.

Der Begriff der "Programmierzeichenkette in natürlicher Sprache" bezeichnet dabei im Zusammenhang mit der vorliegenden Erfindung, wie der zuvor erläuterte Begriff "Ausdruck in natürlicher Sprache", grundsätzlich einen ein oder mehrere Wörter in natürlicher Sprache umfassenden Ausdruck. Die Wörter können dabei wiederum in Ihrer Grundform vorliegen oder der Ausdruck kann einen, zumindest teilweise, grammatikalisch korrekten Satz oder eine Mehrzahl solcher Sätze umfassen. "Programmierzeichenkette" wird dieser Ausdruck genannt, weil dieser Ausdruck, wie nachfolgend beschrieben, zum Programmieren, d.h. zum Erstellen eines von einer Recheneinheit ausführbaren Programms, verwendet wird, und insofern als "Programmcode" einer "Programmiersprache" angesehen werden kann, wobei die Programmiersprache im Zusammenhang mit der vorliegenden Erfindung die natürliche Sprache ist.

Während oder nach dem Eingeben der Programmierzeichenkette werden eine oder mehrere Zeichenketten-Programmcode-Komponenten aus der Mehrzahl der Zeichenketten-Programmcode-Komponenten ausgewählt, wenn die Programmierzeichenkette zumindest eine Teilzeichenkette der Definitionszeichenkette der Zeichenketten-Programmcode-Komponenten - im Wesentlichen - umfasst. Mit anderen Worten werden Übereinstimmungen zwischen der Programmierzeichenkette und den Definitionszeichenketten der Zeichenketten-Programmcode-Komponenten - auf Zeichenkettenbasis - gesucht, und falls solche vorliegen, die entsprechenden Zeichenketten-Programmcode-Komponenten ausgewählt. Mit nochmals anderen Worten werden die Zeichenketten-Programmcode-Komponenten mittels der Programmierzeichenkette quasi "aufgerufen".

Es versteht sich, da es sich jeweils um natürliche Sprache handelt, dass eine Übereinstimmung eines Teils der Programmierzeichenkette mit einer Teilzeichenkette einer Zeichenketten-Programmcode-Komponente nicht immer hundertprozentig sein muss. Es kann vorgesehen sein, dass eine solche Übereinstimmung lediglich eine vorgegebene Schwelle gemäß einem vorgegebenen Ähnlichkeitsmaß übersteigen muss. Als Ähnlichkeitsmaß zum Vergleichen einer Programmierzeichenkette mit der Definitionszeichenkette einer Zeichenketten-Programmcode-Komponente können, wie vorstehend mit Bezug auf die erste Variante eines erfindungsgemäßen Verfahrens zum Steuern eines Systems beschrieben, im Stand der Technik bekannte Ähnlichkeitsmaße verwendet werden. Gleiches gilt für ein Verfahren zum Vergleichen einer Programmierzeichenkette mit der Definitionszeichenkette; hierfür sind in Stand der Technik zahlreiche Verfahren bekannt, beispielsweise herkömmliche Pattern-Matching-Verfahren. Die vorgegebene Schwelle, die beispielsweise mittels eines numerischen Wertes zwischen 0 und 1 in Abhängigkeit des verwendeten Ähnlichkeitsmaßes angegeben werden kann, kann variieren. Spezifische Ähnlichkeitsmaße oder Vergleichsverfahren sind nicht Gegenstand der vorliegenden Erfindung. Im einfachsten Fall kann die Programmierzeichenkette dahingehend analysiert werden, ob sie einen vorgegebenen Anteil des Ausdrucks in natürlicher Sprache der Definitionszeichenkette exakt oder approximativ umfasst. Exakt bedeutet z.B. Wortidentität. Approximativ kann z.B. bedeuten, dass grammatikalische Abweichungen (z.B. Singular/Plural, Kasus, Beugung, etc.) zulässig sind und z.B. Satzzeichen, wie Komma oder dergleichen, ignoriert werden. Auch synonyme Worte oder Begriffe können als ähnlich angesehen werden.

In einem weiteren Verfahrensschritt wird schließlich ein der Programmierzeichenkette zugeordnetes Programm erzeugt, auf Basis des oder der Programmcodesegmente der zumindest einen ausgewählten Zeichenketten-Programmcode-Komponente.

Ein entsprechendes System zum Programmieren in natürlicher Sprache umfasst eine Mehrzahl vorstehend beschriebener Zeichenketten-Programmcode-Komponenten. Das System umfasst weiterhin eine Eingabeeinrichtung zum Eingeben einer Programmierzeichenkette in natürlicher Sprache und eine mit der Eingabeeinrichtung gekoppelte Steuereinrichtung.

Die Eingabeeinrichtung kann einen Editor umfassen, welcher eingerichtet ist, die Programmierzeichenkette zu editieren, insbesondere mit Bezug auf eine Eingabe oder Auswahl von Parametern zum Spezifizieren der durch das Programmcodesegment einer ausgewählten Zeichenketten-Programmcode-Komponente bereitgestellten Funktionalität, wie dies nachstehend noch genauer beschrieben wird.

Die Steuereinrichtung ist eingerichtet, die Zeichenketten-Programmcode-Komponenten zu speichern und die eingegebene Programmierzeichenkette zu verarbeiten. Die Steuereinrichtung ist weiter eingerichtet, zumindest eine der Zeichenketten-Programmcode-Komponenten auszuwählen, wenn die eingegebene Programmierzeichenkette zumindest eine Teilzeichenkette der Definitionszeichenkette der Zeichenketten-Programmcode-Komponente in vorstehend beschriebener Weise umfasst.

Weiter Teil des Systems sind, für zumindest eine vorgegebene Programmiersprache, ein Codegenerator und ein Compiler, welche eingerichtet sind, ein der Programmierzeichenkette zugeordnetes Programm zu erzeugen, auf Basis des oder der Programmcodesegmente der zumindest einen ausgewählten Zeichenketten-Programmcode-Komponente.

Dieser Aspekt der vorliegenden Erfindung unterscheidet sich somit grundlegend vom Stand der Technik. Dort wird zumeist versucht, basierend auf Verfahren der künstlichen Intelligenz, eine natürlichsprachliche Eingabe "zu verstehen", d.h. linguistisch zu analysieren und dadurch die Bedeutung der Eingabe zu erfassen. In einem weiteren Schritt wird dann versucht, diese Bedeutung in Programmcode zu überführen. Die vorliegend vorgeschlagene Vorgehensweise ist dagegen grundsätzlich nicht auf "Verstehen" angewiesen, sondern operiert streng deterministisch - ohne jede Gefahr eines semantischen Fehlverständnisses einer Eingabe. Die eingegebene Programmierzeichenkette wird nicht linguistisch oder semantisch analysiert, sondern lediglich auf Basis eines Zeichenkettenvergleichs mit den Definitionszeichenketten der gespeicherten Zeichenketten-Programmcode-Komponenten verglichen. Dies erfordert zum einen kaum Rechenaufwand und ist zum anderen auf sehr einfache Weise zu implementieren.

Die vorliegende Erfindung bietet weitere Vorteile. Der vorgeschlagene Ansatz ist hochgradig modular. Die Zeichenketten-Programmcode-Komponenten sind unabhängig voneinander. Verschiedene Entwicklern können unabhängig von einander, an verschiedenen Orten und zu verschiedenen Zeiten, neue Zeichenketten-Programmcode-Komponenten entwickeln und dem System hinzufügen. Wie nachstehend noch genauer dargestellt, können aus einfachen Zeichenketten-Programmcode-Komponenten, deren Programmcodesegmente jeweils eine elementare, eng begrenzte Basisfunktionalität implementieren, auf einfache Weise, mittels Programmierung in natürlicher Sprache, neue komplexere Zeichenketten-Programmcode-Komponenten erzeugt und dem System hinzugefügt werden.

Die Programmcodesegmente der Zeichenketten-Programmcode-Komponenten gemäß dem vorliegenden Verfahren entsprechen in etwa in Maschinensprache realisierten elementaren Methoden in höheren Programmiersprachen. Je mehr Zeichenketten-Programmcode-Komponenten das System umfasst, und je vielfältiger diese sind, desto größer und variabler werden die Möglichkeiten der Programmierung in natürlicher Sprache im Rahmen des vorstehend vorgeschlagenen Systems.

Hauptzielrichtung dieses Aspekts der vorliegenden Erfindung ist es, dass Anwender, die nicht über spezifische Programmierkenntnisse verfügen, Programme - mittels natürlicher Sprache, auf Basis von seitens von Entwicklern bereitgestellten Zeichenketten-Programmcode-Komponenten - selbst erstellen können. Es ist zu erwarten, dass auf diese Weise die Komplexität von Softwaresystemen in verschiedenen Anwendungsgebieten deutlich vermindert werden kann, zusammen mit damit verbundenen Entwicklungszeiten und -kosten. Neue Anforderungen oder kleine Änderungen in bestehenden Systemen erfordern nun grundsätzlich keine Änderung einer möglicherweise bereits lange gepflegten und mehrfach angepassten Grundarchitektur, sondern lediglich die Ergänzung der einen oder anderen Zeichenketten-Programmcode-Komponente und das Erzeugen darauf basierender Ergänzungen - mittels auf einfache Weise in natürlicher Sprache erstellter Programme. Weiterhin ist praktisch keine - grundsätzlich sehr zeitaufwändige - Kommentierung erzeugten Programmcodes mehr erforderlich, da nun mittels natürlicher Sprache programmiert wird und sich das Programm damit quasi selbst erklärt.

Wie bereits eingangs erwähnt, ist gemäß einer bevorzugten Ausführungsform zumindest eine der ausgewählten Zeichenketten-Programmcode-Komponenten eingerichtet, eine Parametereingabe zu unterstützen, mittels welcher die durch das Programmcodesegment der ausgewählten Zeichenketten-Programmcode-Komponente bereitgestellte Funktionalität während der Programmierung in natürlicher Sprache dynamisch spezifiziert werden kann. Bevorzugt erfolgt dies mittels einer eigenen Methode zur Parametereingabe.

Gemäß dieser Ausführungsform umfasst das Verfahren daher einen Schritt des Eingebens zumindest eines Parameters zum Spezifizieren der durch das Programmcodesegment der ausgewählten Zeichenketten-Programmcode-Komponente bereitgestellten Funktionalität. Dieser Schritt erfolgt während oder nach dem Eingeben der Programmierzeichenkette, und vor dem Schritt des Erzeugens des der Programmierzeichenkette zugeordneten Programms. Eine Parametereingabe kann spezifisch auf verschiedene Weisen erfolgen, wie dies vorstehend bereits beschrieben worden ist.

Das vorstehend beschriebene Verfahren kann zum Programmieren herkömmlicher Anwendungen, beispielsweise zum Programmieren von so genannten Apps für Mobilfunkgeräte, verwendet werden. Im Schritt des Erzeugens des der Programmierzeichenkette zugeordneten Programms wird dazu auf einer vorgegebenen Plattform ausführbarer Programmcode erzeugt. Wie bereits erwähnt, kann das System Codegenerator und Compiler für jede beliebige Programmiersprache und Ausführungsumgebung umfassen.

Auf der anderen Seite können durch Programmieren in natürlicher Sprache, wie es vorstehend beschrieben worden ist, auch neue Zeichenketten-Programmcode-Komponenten auf Basis bereits vorliegender Zeichenketten-Programmcode-Komponenten erzeugt werden. Dazu wird eine neue Definitionszeichenkette für die neu zu erzeugende Zeichenketten-Programmcode-Komponente angegeben, und die mehreren Zeichenketten-Programmcode-Komponenten werden mittels Eingebens einer geeigneten Programmierzeichenkette in natürlicher Sprache in der vorstehend beschriebenen Weise ausgewählt. Ein neues Programmcodesegment für die neu zu erzeugende Zeichenketten-Programmcode-Komponente wird dann auf Basis eines Programmcodes erzeugt, welcher im Schritt des Erzeugens des der Programmierzeichenkette zugeordneten Programms automatisch entsteht.

Eine bevorzugte Ausführungsform eines Systems, welches zum Verarbeiten von natürlicher Sprache eingerichtet ist, umfasst eine Mehrzahl vorstehend beschriebener Zeichenketten-Programmcode-Komponente, die in das System integriert sind. Die Zeichenketten-Programmcode-Komponenten umfassen dabei, wie erwähnt, eine Definitionszeichenkette, die einen Ausdruck in natürlicher Sprache umfasst, und ein der Definitionszeichenkette eindeutig zugeordnetes Programmcodesegment, welches eine dem Ausdruck in natürlicher Sprache zugeordnete Funktionalität implementiert. Zumindest eine der Zeichenketten-Programmcode-Komponenten aus der Mehrzahl der Zeichenketten-Programmcode-Komponenten umfasst eine Methode zur Parametereingabe, wodurch diese Zeichenketten-Programmcode-Komponente eingerichtet ist, eine Parametereingabe zu unterstützen, mittels welcher die durch das Programmcodesegment dieser Zeichenketten-Programmcode-Komponente bereitgestellte Funktionalität spezifiziert werden kann.

Das System ist gemäß einer Ausführungsform eingerichtet, beim Empfangen einer Eingabezeichenkette, welche gemäß einem vorgegebenen Ähnlichkeitsmaß eine vorgegebene Ähnlichkeit zu der Definitionszeichenkette aufweist, die durch das Programmcodesegment implementierte Funktionalität auszuführen.

Wie vorstehend bereits erwähnt, kann das System eine beliebige Anzahl solcher Zeichenketten-Programmcode-Komponenten integrieren. Diese bilden jeweils gekapselte und funktionale Einheiten und können daher von unabhängigen Entwicklern bereitgestellt werden und auf diese Weise die Funktionalität des Gesamtsystems erweitern. Wie ebenfalls bereits erwähnt ist es möglich, dass die Funktionalität einer Zeichenketten-Programmcode-Komponente die Funktionalität einer weiteren Zeichenketten-Programmcode-Komponente aufruft, indem eine entsprechende Eingabezeichenkette erzeugt und als Eingabezeichenkette an das System übergeben wird. Mit anderen Worten erfolgt ein Aufruf einer Zeichenketten-Programmcode-Komponente durch eine andere Zeichenketten-Programmcode-Komponenten nicht direkt, sondern immer indirekt, über das System. Es bestehen somit keine Abhängigkeiten zwischen einzelnen Zeichenketten-Programmcode-Komponenten, die bei der Implementierung einer Zeichenketten-Programmcode-Komponente beachtet werden müssten. Jede der Zeichenketten-Programmcode-Komponenten kann dabei eine spezifische Lösung für ein spezifisches Teilproblem bereitstellen. Durch geeignete Kombination der Funktionalitäten verschiedener Zeichenketten-Programmcode-Komponenten können auf diese Weise komplexe Sachverhalte umfassend behandelt werden. Bislang fehlende Funktionalitäten lassen sich jederzeit, durch Integration neuer Zeichenketten-Programmcode-Komponenten, ergänzen, ohne das bereits vorliegende Zeichenketten-Programmcode-Komponenten oder das System an sich verändert werden müssen.

Gemäß einer Ausführungsform umfasst das System eine Steuereinrichtung, die eingerichtet ist, eine Eingabezeichenkette zu empfangen, die einen Ausdruck in natürlicher Sprache umfasst. Die Steuereinrichtung ist weiterhin eingerichtet, die Eingabezeichenkette mit einer Definitionszeichenkette einer in dem System bereitgestellten Zeichenketten-Programmcode-Komponente gemäß dem vorgegebenen Ähnlichkeitsmaß zu vergleichen und eine durch das Programmcodesegment der entsprechenden Zeichenketten-Programmcode-Komponente implementierte Funktionalität in dem Fall auszuführen, dass die Eingabezeichenkette die vorgegebene Ähnlichkeit zu der Definitionszeichenkette gemäß dem vorgegebenen Ähnlichkeitsmaß aufweist.

Gemäß einer weiteren Ausführungsform umfasst das System ein Eingabegerät. Das Eingabegerät ist eingerichtet, eine Nutzereingabe in natürlicher Sprache zu empfangen, daraus eine Eingabezeichenkette abzuleiten, die einen Ausdruck in natürlicher Sprache umfasst, und diese Eingabezeichenkette an die Steuereinrichtung weiterzuleiten. Ein solches Eingabegerät kann beispielsweise eine Spracherkennungseinrichtung der herkömmlichen Art umfassen, welche mittels eines Mikrophons erfasste Sprache in eine entsprechende Zeichenkette umwandelt. Weiterhin kann ein Editor, der eine Eingabe mittels einer Tastatur oder dergleichen erlaubt, als Eingabegerät für das System dienen.

Das System kann gemäß einer Ausführungsform eine weitere Klasse von Eingabegeräten umfassen, welche eingerichtet sind, z.B. mittels eines Sensors ein Umgebungssignal zu empfangen, daraus eine Eingabezeichenkette abzuleiten, die einen Ausdruck in natürlicher Sprache umfasst, und diese Eingabezeichenkette an die Steuereinrichtung des Systems weiterzuleiten. Noch allgemeiner kann ein Eingabegerät vorgesehen sein, welches eingerichtet ist, ein beliebiges vorgegebenes Triggersignal zu empfangen, eine von dem Triggersignal abhängige Eingabezeichenkette abzuleiten, die einen Ausdruck in natürlicher Sprache umfasst, und die Eingabezeichenkette an das System weiterzuleiten. Das Triggersignal kann ein Umweltsignal sein, welches beispielsweise eine Änderung der Umgebung (z.B. hinsichtlich Helligkeit, Wärme, Lärm etc.) anzeigt. Alternativ kann ein solches Triggersignal auch von dem System ausgesendet werden, um das Eingabegerät anzuregen, eine Eingabezeichenkette zu erzeugen, welche beispielsweise einen aktuellen Systemzustand des Eingabegeräts beschreibt (z.B. "an/aus" im Falle einer Beleuchtungseinrichtung; "offen/geschlossen" in Falle eines Fensters, etc.)

Hier zeigt sich eine weitere Besonderheit des vorliegend beschriebenen Systems. Nicht nur ein menschlicher Nutzer, sondern auch technische Geräte kommunizieren als Nutzer mit der Steuereinrichtung des Systems auf Basis von Ausdrücken in natürlicher Sprache. Die Steuereinrichtung des Systems unterscheidet dabei nicht zwischen einer Eingabe eines menschlichen Nutzers und einer Eingabe eines Nutzers in Form eines technischen Gerätes, sondern verarbeitet die empfangene Eingabezeichenkette, die einen Ausdruck in natürlicher Sprache umfasst, in identischer Weise. Es kann beispielsweise ein Eingabegerät bereitgestellt werden, welches Temperatur, Helligkeit, Feuchtigkeit, Lärm oder ähnliche Umweltparameter erfasst, in natürlicher Sprache beschreibt, und eine Steuereinrichtung des Systems weiterleitet.

Als Reaktion kann das System eine entsprechende Zeichenketten-Programmcode-Komponente aufrufen und damit beispielsweise eine Funktionalität des aufrufenden Geräts und/oder eines anderen Gerätes steuern.

Das System kann weiterhin ein Ausgabegerät umfassen, welches eingerichtet ist, ein Ausgabesignal an einen Nutzer in natürlicher Sprache auszugeben, um einen Dialog zwischen dem Nutzer und einer Zeichenketten-Programmcode-Komponente zu unterstützen. Das Ausgabegerät kann dabei insbesondere eine herkömmliche Sprachausgabe über einen Lautsprecher oder dergleichen bereitstellen. Auch eine Textausgabe über ein Display oder dergleichen ist möglich. Es versteht sich, dass das System auch ein kombiniertes Ein- und Ausgabegerät umfassen kann.

Wie bereits mehrfach erwähnt, kann das System technische Geräte beliebiger Art umfassen, welche eingerichtet sind, mittels einer Funktionalität, die durch ein Programmcodesegment einer Zeichenketten-Programmcode-Komponente implementierten wird, gesteuert zu werden. Das beschriebene Verfahren eigentlich insbesondere zur Steuerung von Robotern. Auch die Steuerung von Haushaltsgeräten oder von Geräten der Unterhaltungselektronik kann mit dem beschriebenen Verfahren erfolgen. Weiterhin kann ein vorstehend beschriebenes Verfahren in vorteilhafterweise zum Implementieren eines Expertensystems verwendet werden. Insbesondere dadurch, dass Zeichenketten-Programmcode-Komponenten seitens verschiedener Anwender auf einfache Weise in das System integriert werden können, können verschiedene Wissensbereiche, die jeweils durch die einzelnen Anwender abgedeckt werden, auf einfache Weise vernetzt werden, um damit die verschieden, bisher lediglich getrennt vorliegenden Wissensbereiche auf einfache Weise zusammenzuführen.

**Kurzbeschreibung der Figuren**

Die Erfindung wird nachfolgend mit Bezug zu den beiliegenden Figuren anhand einiger Ausführungsbeispiele beispielhaft erläutert. Die Figuren zeigen:

Fig. 1     zeigt schematisch eine bevorzugte Ausführungsform einer erfindungsgemäßen Datenstruktur;

Fig. 2     zeigt schematisch verschiedene Komponenten einer ersten bevorzugten Ausführungsform eines erfindungsgemäßen Systems;

Fig. 3     illustriert Schritte einer ersten bevorzugten Ausführungsform eines erfindungsgemäßen Verfahrens unter Verwendung des Systems aus Fig. 2,

Fig. 4     illustriert Schritte einer zweiten bevorzugten Ausführungsform eines erfindungsgemäßen Verfahrens;

Fig. 5     zeigt Komponenten einer zweiten bevorzugten Ausführungsform eines erfindungsgemäßen Systems, zum Programmierung in natürlicher Sprache, und

Fig. 6     illustriert Schritte einer dritten bevorzugten Ausführungsform eines Verfahrens zum Programmieren in natürlicher Sprache unter Verwendung eines Systems aus Fig. 5.

**Detaillierte Beschreibung der Erfindung**

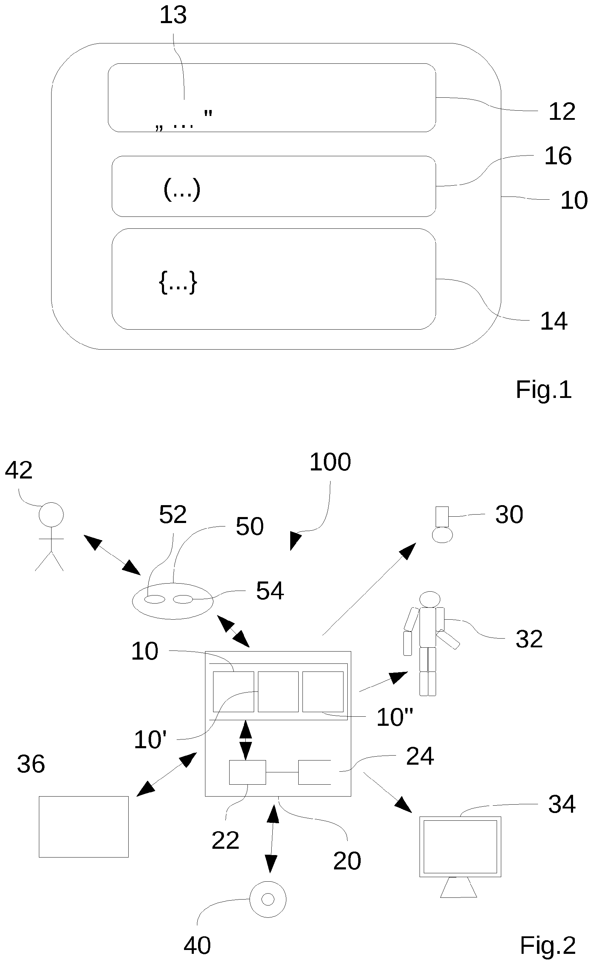

Fig. 1 zeigt schematisch eine bevorzugte Ausführungsform einer Datenstruktur 10 in Form einer Zeichenketten-Programmcode-Komponente 10. Die Zeichenketten-Programmcode-Komponente umfasst eine Definitionszeichenkette 12, die einen Ausdruck 13 in natürlicher Sprache umfasst. Weiterhin umfasst die Zeichenketten-Programmcode-Komponente ein Programmcodesegment 14, die eine dem Ausdruck 13 in natürlicher Sprache zugeordnete Funktionalität implementiert. Schließlich umfasst die Zeichenketten-Programmcode-Komponente eine Methode 16 zur Parametereingabe.

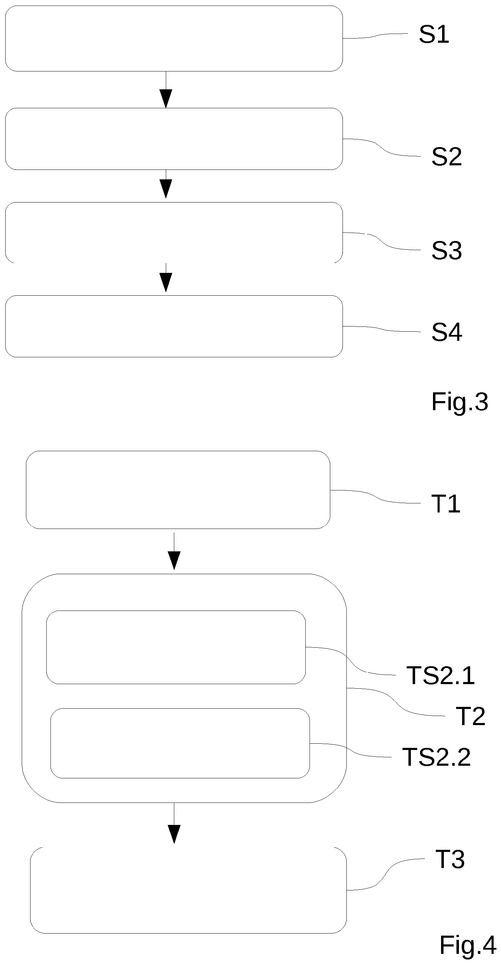

Eine Zeichenketten-Programmcode-Komponente 10 bildet eine untrennbare, gekapselte Einheit, bestehend aus der Definitionszeichenkette 12 mit dem Ausdruck 13 in natürlicher Sprache und dem Programmcodesegment 14, das die Bedeutung des natürlichsprachlichen Ausdrucks 13 realisiert. Die Zeichenketten-Programmcode-Komponente wird technisch als eine Komponente realisiert, die ihre innere Implementierung nach außen verbirgt. Die innere Implementierung besteht z.B. aus einem Methodenbody, der das Programmcodesegment 14 der Zeichenketten-Programmcode-Komponente 10 realisiert. Die Definitionszeichenkette 12 dient quasi als Andockstelle für eine Eingabezeichenkette in natürlicher Sprache, zum Aufrufen der Funktionalität der Zeichenketten-Programmcode-Komponente 10, wie dies nachfolgend mit Bezug auf Fig. 3 näher beschrieben wird. Somit stellt eine Zeichenketten-Programmcode-Komponente 10 immer eine abgeschlossene, in hohem Maß gekapselte und funktionale Einheit dar. Die Zeichenketten-Programmcode-Komponente 10 lässt sich durch Plug-and-Play in an sich bekannter Weise in ein System 100 (vgl. Fig. 2) integrieren.

Eine Zeichenketten-Programmcode-Komponente 10 kann mittels einer herkömmlichen Programmiersprache bereitgestellt werden, wie dies nachfolgend exemplarisch am Beispiel C++ dargestellt wird.

Zum Implementieren einer Zeichenketten-Programmcode-Komponente 10 wird in C++ eine abstrakte Klasse definiert, die als Basisklasse für die konkreten Zeichenketten-Programmcode-Komponente 10 dient:

```
class Zeichenketten-Programmcode-Komponente {
```

```
        public string getSentence() = 0;
        public void collectParameter() = 0;
        public ResultObject executeCodesegment () = 0;
    }
```

Die konkreten Zeichenketten-Programmcode-Komponente implementieren dann diese abstrakte Klasse.

Als Beispiel wird für die Definitionszeichenkette mit dem natürlichsprachlichen Ausdruck "Addiere eine Zahl zu einer anderer Zahl" die Klasse "MyCPlusPlusAddition" realisiert. Die Methode getSentence() liefert einen Ausdruck in natürlicher Sprache zurück.

```
class MyCPlusPlusAddition : Zeichenketten-Programmcode-Komponente {
    public string getSentence(){
            return " Addiere eine Zahl zu einer anderer Zahl";
    } ;
    public void collectParameter( ... ) {
            ... some code;
    } ;
    public Object executeCodesegment (){
            ... some code;
    } ;
}
```

Die Methode collectParameter(...) dient im vorliegenden Beispiel dazu, die notwendigen Funktionsparameter einzusammeln, die für die Ausführung des Codesegments notwendig sind. Dabei kann ein eingegebener Parameter hinsichtlich seiner Korrektheit betreffend den erwarteten Parametertyp geprüft werden, um Fehleingaben zu vermeiden. Im vorliegenden Beispiel könnte im Rahmen der Methode collectParameter(...) beispielsweise geprüft werden, dass genau zwei Parameter in Form numerischer Werte eingegeben werden, und nicht etwa beliebige Zeichenketten.

Die Methode executeCodesegment() dient dazu, die eigentliche Funktionalität der Zeichenketten-Programmcode-Komponente 10, nämlich die Addition zweier Zahlen, zu implementieren.

Es versteht sich, dass das vorstehend lediglich exemplarisch dargelegte Konzept einer Zeichenketten-Programmcode-Komponente nicht lediglich in C++, sondern mittels einer beliebige konventionelle Programmiersprache, wie beispielsweise PHP, Visual Basic, C#, Objective-C oder ähnliches, realisiert werden kann.

Alternativ zur Programmierung einer Zeichenketten-Programmcode-Komponente mittels einer herkömmlichen Programmiersprache kann eine Zeichenketten-Programmcode-Komponente auch mittels natürlicher Sprache programmiert werden, wie dies nachstehend mit Bezug zu Fig. 4 noch im Detail beschrieben wird.

Fig. 2 zeigt exemplarisch ein System 100, in welches verschiedene Zeichenketten-Programmcode-Komponenten 10, 10', 10" integriert sind. Ein Nutzer 40, 42 kann mittels natürlicher Sprache mit dem System kommunizieren und dadurch das Ausführen verschiedener Funktionalitäten auslösen. Mittels dieser Funktionalitäten, welche jeweils durch Programmcodesegmente der Zeichenketten-Programmcode-Komponenten 10, 10', 10" implementiert sind, können insbesondere an das System 100 angeschlossene Geräte 30, 32, 34, 36 gesteuert werden, wie beispielsweise eine Lampe 30, ein Roboter 32, ein Fernseher 34 oder ein Expertsystem 36. Als Nutzer kommen sowohl ein menschlicher Nutzer 42 als auch ein entsprechend eingerichtetes technisches Gerät 40 in Frage.

Ein Zusammenspiel der einzelnen Komponenten des Systems wird im Folgenden mit Bezug zu den Figuren 3 und 4 beschrieben.

In Fig. 3 sind Schritte einer ersten Ausführungsform eines Verfahrens zum Steuern einer Kommunikation eines Nutzers 40, 42 mit einem System 100 dargestellt.

In Schritt S1 wird zumindest eine Zeichenketten-Programmcode-Komponente 10 in dem System 100 bereitgestellt. Die Zeichenketten-Programmcode-Komponente 10 umfasst eine Definitionszeichenkette 12, die einen Ausdruck 13 in natürlicher Sprache umfasst, und ein der Definitionszeichenkette 12 eindeutig zugeordnetes Programmcodesegment 14, welches eine dem Ausdruck 13 in natürlicher Sprache zugeordnete Funktionalität implementiert.

Das System 100 ist eingerichtet, bei Empfangen einer Eingabezeichenkette, welche gemäß einem vorgegebenen Ähnlichkeitsmaß eine vorgegebene Ähnlichkeit zu der Definitionszeichenkette 12 aufweist, die durch das Programmcodesegment 14 implementierte Funktionalität auszuführen, wie dies nachfolgend beschrieben wird.

Dazu umfasst das System 100 eine Steuereinrichtung 20. Die Steuereinrichtung 20 ist eingerichtet, eine Eingabezeichenkette zu empfangen, die einen Ausdruck in natürlicher Sprache umfasst. Die Steuereinrichtung 20 ist weiterhin eingerichtet, die Eingabezeichenkette mit einer Definitionszeichenkette 12 einer Zeichenketten-Programmcode-Komponente 10 gemäß dem vorgegebenen Ähnlichkeitsmaß zu vergleichen, und eine durch ein Programmcodesegment 14 der betreffenden Zeichenketten-Programmcode-Komponente 10 implementierten Funktionalität auszuführen, falls die Eingabezeichenkette die vorgegebene Ähnlichkeit zu der Definitionszeichenkette 12 gemäß dem vorgegebenen Ähnlichkeitsmaß aufweist.

In Schritt S2 wird seitens der Steuereinrichtung 20 einer Eingabezeichenkette empfangen, beispielsweise in Form des natürlichsprachlichen Ausdrucks "Schalte bitte den Fernseher an" von dem menschlichen Nutzer 42. Die Eingabe einer Eingabezeichenkette kann mittels eines Eingabegeräts 50, 52 unterstützt werden, welches beispielsweise eingerichtet ist, einen von dem Nutzer 42 gesprochenen Satz "Schalte bitte den Fernseher an" zu erfassen, z.B. mit Hilfe eines Mikrophons, und in eine entsprechende Zeichenkette umzuwandeln, beispielsweise mit Hilfe einer herkömmlichen Spracherkennungssoftware. Die umgewandelte Zeichenkette, "Schalte bitte den Fernseher an", wird dann seitens des Eingabegeräts 50, 52 an die Steuereinrichtung 20 als Eingabezeichenkette weitergeleitet.

In Schritt S3 vergleicht die Steuereinrichtung die Eingabezeichenkette mit einer Definitionszeichenkette eines oder mehrerer Zeichenketten-Programmcode-Komponente 10, 10', 10" gemäß einem vorgegebenen Ähnlichkeitsmaß.

Ein Vergleich von Ausdrücken in natürlicher Sprache kann beispielsweise mittels herkömmlich bekannter Pattern-Matching-Verfahren durchgeführt werden.

Es sei mit Bezug auf das in Fig. 2 illustrierte Beispiel angenommen, in dem System 100 ist eine Zeichenketten-Programmcode-Komponente 10 integriert, welche die Definitionszeichenkette 12 mit dem natürlichsprachlichen Ausdruck "Schalte Fernseher an" umfasst. Diese Definitionszeichenkette 12 ist einem entsprechenden Programmcodesegment 14 zugeordnet, welches eine Funktionalität zum Einschalten des Fernsehers 34 implementiert, der an das System 100 angeschlossen ist.

Ein Vergleich der Eingabezeichenkette "Schalte bitte den Fernseher an" mit der Definitionszeichenkette "Schalte Fernseher an" ergibt, dass die Eingabezeichenkette die Definitionszeichenkette vollständig umfasst, was vorliegend als hinreichende Ähnlichkeit interpretiert wird.

Es versteht sich, dass zum Vergleichen von Zeichenketten, die jeweils Ausdrücke in natürlicher Sprache umfassen, verschiedene Ähnlichkeitsmaße und verschiedene Vergleichsverfahren herangezogen werden können. Dem Fachmann sind solche Verfahren, die nicht Gegenstand der vorliegenden Erfindung sind, an sich bekannt. Weiterhin bekannt ist, dass zu vergleichende Ausdrücke vor dem Vergleichen geeignet vereinfacht werden können, indem beispielsweise (in vorliegenden Zusammenhang inhaltslose) Füllwörter, wie "bitte", Artikel und dergleichen gestrichen werden. Weiterhin können zu vergleichende Ausdrücke grammatikalisch vereinfacht werden, indem beispielsweise Verben lediglich in der Grundform angegeben werden.

Falls, wie im obigen Fall, die Eingabezeichenkette "Schalte bitte den Fernseher an" die vorgegebene Ähnlichkeit zu der Definitionszeichenkette "Schalte Fernseher an" gemäß dem vorgegebenen Ähnlichkeitsmaß aufweist, führt die Steuereinrichtung in Schritt S4 die durch den entsprechenden Programmcodesegment 14 implementierten Funktionalität aus, wodurch der Fernseher 34 angeschaltet wird.

In dem Fall, dass in Schritt S3 keine hinreichend ähnliche Definitionszeichenkette einer Zeichenketten-Programmcode-Komponente gefunden werden kann, kann die Steuereinrichtung 20 dies dem Nutzer geeignet signalisieren. Sollte das System hingegen eine Mehrzahl von Definitionszeichenketten auffinden, welche jeweils eine gewisse Ähnlichkeit zu der Definitionszeichenkette aufweisen, so kann dies dem Nutzer ebenfalls ausgegeben werden. Dem Nutzer kann in diesem Fall die Möglichkeit gegeben werden, diejenige Zeichenketten-Programmcode-Komponente auszuwählen, die anhand der entsprechenden Definitionszeichenkette nach seiner Auffassung am besten zu seiner Eingabezeichenkette passt.

Eine Eingabezeichenkette mit einem Ausdruck in natürlicher Sprache kann alternativ auch von einem Eingabegerät, beispielsweise einem Helligkeitssensor 40, erzeugt und an die Steuereinrichtung 20 übermittelt werden. Dazu kann das Eingabegerät 40, wenn es z.B. erkennt, dass die Helligkeit in einem Raum nachlässt, z.B. am Abend oder bei starker Bewölkung, eine Eingabezeichenkette der Form "es ist dunkel" erzeugen und an die Steuereinrichtung 20 übermitteln. Diese kann dann, wie vorstehend erläutert, die in dem System integrierten Zeichenketten-Programmcode-Komponenten 10, 10', 10" dahingehend durchsuchen, ob eine dieser Zeichenketten-Programmcode-Komponenten eine Definitionszeichenkette mit hinreichender Ähnlichkeit aufweist. Ist dies der Fall, kann die Steuereinrichtung 20 die dieser Definitionszeichenkette eindeutig zugeordnete Funktionalität ausführen, welche beispielsweise zur Folge haben kann, dass die dem System 100 angeschlossene Lampe 30 eingeschaltet wird. Es kann weiterhin vorgesehen sein, dass das Gerät 40 diese Eingabezeichenkette nicht automatisch an die Steuereinrichtung 20 übermittelt, sondern lediglich dann, wenn es eine entsprechende Anfrage von der Steuereinrichtung 20 empfängt.

Alternativ zu der Steuerung technischer Geräte können die Programmcodesegmente 14 der Zeichenketten-Programmcode-Komponente 10 in vorteilhafter Weise dazu verwendet werden, eine Funktionalität zu implementieren, die eine Konversation zwischen einem Nutzer 42 und der Zeichenketten-Programmcode-Komponente 10 erlaubt. Insbesondere im Zusammenhang mit Expertensystemen, beispielsweise im medizinischen Bereich, kann dies vorteilhaft eingesetzt werden. Nachfolgendes Beispiel soll dies nur sehr knapp und exemplarisch andeutet.

Ein Expertensystem 36 kann in der nachstehend beschriebenen Weise mit einer Nutzer 42 unter Verwendung von Zeichenketten-Programmcode-Komponenten 10, 10' kommunizieren. Der Nutzer 42 kann sich beispielsweise mit Ausdruck "ich glaube, ich bin krank" über die Steuereinrichtung 20 an das Expertensystem 36 wenden. Die Steuereinrichtung 20 vergleicht die diesen Ausdruck umfassende Eingabezeichenkette mit Definitionszeichenketten vorliegender Zeichenketten-Programmcode-Komponente 10 und findet beispielsweise eine Definitionszeichenkette 12 einer Zeichenketten-Programmcode-Komponente 10 mit dem Ausdruck "ich bin krank". Das Programmcodesegment 14 dieser Zeichenketten-Programmcode-Komponente 10 implementiert eine Konversation mit dem Nutzer 42, etwa in der folgenden Weise:

```
Nutzer: "ich glaube, ich bin krank"
System: "Was fehlt Dir, hast Du Fieber?"
Nutzer: "ja"
System: "Wie hoch ist Dein Fieber?
Nutzer: "38,5"
System: "Wie lange hast Du schon Fieber?"
Nutzer: "Seit heute Mittag"
System: "Hast Du weitere Beschwerden"
Nutzer: "Nein"
System: "Dann ruh' Dich aus, vielleicht geht es morgen schon wieder besser".
```

Die Ausgaben des Systems können über eine geeignete Ausgabeeinrichtung 50, 54, beispielsweise einen Lautsprecher 54, in natürlicher Sprache für den Nutzer ausgegeben werden. Alternativ kann auch eine Anzeige der Fragen und Hinweise auf einem Monitor erfolgen.

Die Zeichenketten-Programmcode-Komponente 10, die mittels der Eingabezeichenkette "ich glaube, ich bin krank" aufgerufen worden ist, implementiert eine Konversation, die den allgemeinen Gesundheitszustand des Nutzers abfragt. Stellen sich dabei keine Besonderheiten ein, kann die Konversation wie geschildert beendet werden. In dem Fall aber, dass die Konversation beispielsweise wie folgt verläuft,

...

```
System: "Was fehlt Dir, hast Du Fieber?"
Nutzer: "ja"
System: "Wie hoch ist Dein Fieber?
Nutzer: "39,5"
System: "Wie lange hast Du schon Fieber?"
Nutzer: "Seit drei Tagen"
System: "Hast Du weitere Beschwerden"
Nutzer: "Ja, Kopf- und Gliederschmerzen, Schnupfen und Husten",
```
kann das Programcodesegment 14 der Zeichenketten-Programmcode-Komponente 10 derart ausgebildet sein, dass die Konversation wie folgt weiterläuft:
System: "Deine Symptome könnten auf eine Grippe hindeuten"...

Gleichzeitig kann die Funktionalität der aktuell ausgeführten Zeichenketten-Programmcode-Komponente 10 eingerichtet sein, eine Eingabezeichenkette mit dem Ausdruck "Grippe" an die Steuereinrichtung 20 zu übermitteln. Auf diese Weise kann dann, um den Gesundheitszustand des Nutzers 42 in Hinblick auf den Verdacht des Vorliegens einer Grippe mittels einer eigenständigen, genau zu diesem Zweck vorgesehenen Zeichenketten-Programmcode-Komponente 10' näher zu untersuchen, die Funktionalität dieser Zeichenketten-Programmcode-Komponente 10' aufgerufen werden. Diese Funktionalität kann dann mittels einer geeigneten Konversation weitere Informationen über den Zustand des Nutzers erfragen und entsprechende Handlungsvorschläge unterbreiten.

In der Regel kann die Zeichenketten-Programmcode-Komponente 10', welche die Definitionszeichenkette mit dem Ausdruck "Grippe" aufweist, auf solche Informationen, die bereits von der vorhergehenden Zeichenketten-Programmcode-Komponente 10 erfragt worden sind (Fieber, wie hoch, wie lange, weitere Beschwerden) zugreifen. Entsprechende, in der Funktionalität grundsätzlich vorgesehene Fragen, können dann ausgelassen werden. Für einen Nutzer bleibt es daher transparent, dass die eine Zeichenketten-Programmcode-Komponente 10 indirekt eine weitere Zeichenketten-Programmcode-Komponente 10' aufgerufen hat.

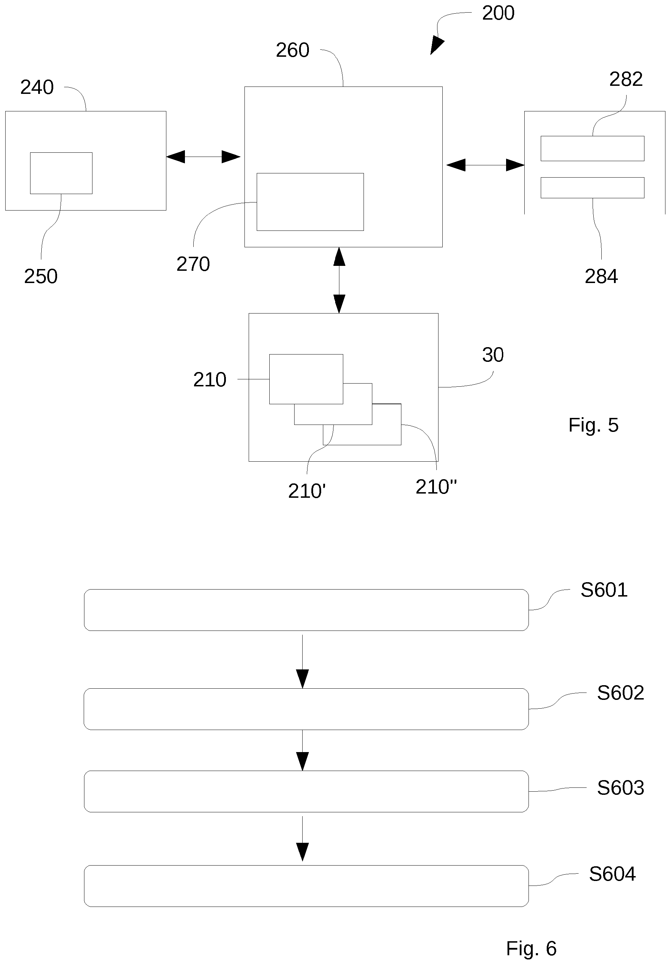

Wie bereits mehrfach erwähnt, kann eine Zeichenketten-Programmcode-Komponente seitens eines Nutzers auch mittels natürlicher Sprache programmiert werden, wie dies nachfolgend exemplarisch und vorerst vereinfacht an einem sehr einfachen Beispiel mit Bezug zu Fig. 4 dargestellt wird. Programmieren in natürlicher Sprache wird nachstehend mit Bezug zu den Figuren 5 und 6 noch im Detail beschrieben.

In einem ersten Schritt T1 wird eine Mehrzahl von Zeichenketten-Programmcode-Komponenten 10; 10', 10" in dem System 100 bereitgestellt. Diese Zeichenketten-Programmcode-Komponenten bilden die Grundlage der natürlichsprachlichen Programmierung einer weiteren, neuen Zeichenketten-Programmcode-Komponente.

Mit Bezug auf das System 100 in Fig. 2 sei angenommen, dass in dem System bereits verschiedene Zeichenketten-Programmcode-Komponenten 10, 10', 10" integriert sind, beispielsweise eine Zeichenketten-Programmcode-Komponente 10 zum Einschalten des Fernsehers 34. Diese umfasst eine Definitionszeichenkette 12 mit dem Ausdruck "Schalte Fernseher an" und ein damit gekoppeltes Programmcodesegment, welches eine Funktionalität zum Einschalten des Fernsehers 34 implementiert.

Eine weitere Zeichenketten-Programmcode-Komponente 10' dient dazu, die Helligkeit und Beleuchtung im Raum anzupassen und umfasst die Definitionszeichenkette "Prüfe Helligkeit". Das Programmcodesegment 14' dieser Zeichenketten-Programmcode-Komponente 10' implementiert eine Funktionalität, welche eine Anfrage an den Helligkeitsenor 40 sendet, einen aktuellen Helligkeitswert in Form einer Eingabezeichenkette (umfassend einen natürlichsprachlichen Ausdruck) an die Steuereinrichtung 20 zu übermitteln. Wie bereits vorstehend erwähnt, kann in dem System 100 bereits eine weitere Zeichenketten-Programmcode-Komponente 10" vorliegen, welche diese Eingabezeichenkette verarbeitet und z.B. bei Empfang eines Ausdrucks der Form "es ist dunkel" die Lampe 30 einschaltet, oder in Reaktion auf einen Ausdruck "es ist sehr hell" eine Verdunklungsvorrichtung, z.B. eine Jalousie (nicht gezeigt), betätigt.

Dann definiert der Nutzer 42 in Schritt T2 eine neue Zeichenketten-Programmcode-Komponente unter Verwendung einer Mehrzahl bereits in dem System bereitgestellten Zeichenketten-Programmcode-Komponenten 10; 10', 10" in der folgenden Weise:

In einem ersten Teilschritt TS2.1 gibt der Nutzer 42 nun eine Definitionszeichenkette für die zu definierende neue Zeichenketten-Programmcode-Komponente, welche einen Ausdruck in natürlicher Sprache umfasst. Im vorliegenden Beispiel könnte diese Definitionszeichenkette beispielsweise den Ausdruck "ich möchte fernsehen" umfassen.

In einem weiteren Teilschritt TS2.2 gibt der Nutzer eine Zeichenkettenfolge ("Programmierzeichenkette") an zum Definieren des Programmcodesegments der zu neu definierenden weiteren Zeichenketten-Programmcode-Komponente. Die Zeichenketten der Zeichenkettenfolge umfassen dabei jeweils einen Ausdruck in natürlicher Sprache. Wenn eine Zeichenkette der Zeichenkettenfolge gemäß dem vorgegebenen Ähnlichkeitsmaß eine vorgegebene Ähnlichkeit zu einer Definitionszeichenkette einer Zeichenketten-Programmcode-Komponente 10 der Mehrzahl der Zeichenketten-Programmcode-Komponenten 10; 10', 10" aufweist, d.h. wenn die "Programmierzeichenkette" zumindest eine Teilzeichenkette der Definitionszeichenkette der Zeichenketten-Programmcode-Komponente 10 umfasst, wird das Programmcodesegment der neu zu definierenden Zeichenketten-Programmcode-Komponente um das Programmcodesegment 14 der Zeichenketten-Programmcode-Komponente 10 der Mehrzahl der Zeichenketten-Programmcode-Komponenten 10; 10', 10" erweitert.

Konkret könnte im vorliegenden Fall die Zeichenkettenfolge (Programmierzeichenkette) wie folgt lauten ("Prüfe die Helligkeit", "Schalte den Fernseher an"). Die Zeichenkette "Prüfe die Helligkeit" umfasst dabei den Ausdruck "Prüfe Helligkeit" der Definitionszeichenkette 12' der vorstehend erläuterten Zeichenketten-Programmcode-Komponente 10'. Folglich wird das (noch leere) Programmcodesegment der zu definierenden Zeichenketten-Programmcode-Komponente um das Programmcodesegment der Zeichenketten-Programmcode-Komponente 10' ergänzt. In analoger Weise wird das Programmcodesegment der zu definierenden Zeichenketten-Programmcode-Komponente zusätzlich um das Programmcodesegment der Zeichenketten-Programmcode-Komponente 10 ergänzt, da die Zeichenkette "Schalte den Fernseher an" den Ausdruck "Schalte Fernseher an" der Definitionszeichenkette 12 umfasst.

In einem abschließenden Schritt T3 wird die in vorstehend beschriebener Weise neu definierte Zeichenketten-Programmcode-Komponente in das System 100 integriert.

Wenn der Nutzer 42 sich nun mit den Ausdruck "ich möchte Fernsehen" an das System 100 wendet, wird die Funktionalität der neu definierten Zeichenketten-Programmcode-Komponente aufgerufen. Diese prüft die Helligkeit mittels einer Anfrage an den Helligkeitssensor 40. Abhängig von der daraufhin seitens des Systems 100 empfangenen Eingabezeichenkette ("es ist dunkel", "es ist sehr hell") wird gegebenenfalls die Lampe 30 eingeschaltet oder eine Jalousie heruntergelassen. Schließlich wird der Fernseher 34 eingeschaltet.

Es versteht sich, dass mittels eines solchen Verfahrens wesentlich komplexere Abläufe programmiert werden können, allein mittels natürlicher Sprache und unter Verwendung bereits vorliegender Zeichenketten-Programmcode-Komponenten. Insbesondere können auch Kontrollstrukturen, wie Verzweigungen, bedingte Anweisungen, Schleifen, etc. in Form von Zeichenketten-Programmcode-Komponenten implementiert werden, vorzugsweise zu Beginn des Prozesses, als Basisbausteine und unter Verwendung einer herkömmlichen Programmiersprache. Diese Basiskomponenten können dann im Rahmen einer nachfolgenden Programmierung neuer Zeichenketten-Programmcode-Komponente mittels natürlicher Sprache verwendet werden.

Ohne dies im Detail weiter zu erläutern könnte dann eine neue Zeichenketten-Programmcode-Komponente mit der Definitionszeichenkette "ich möchte fernsehen" alternativ zu obigem Beispiel mittels der folgenden Zeichenkettenfolge definiert werden:

"Wenn ich im Arbeitszimmer bin,

    stelle die Helligkeit der Raumbeleuchtung auf Vollmondnacht.
    Lasse die Jalousien herunter und

schalte den Arbeitszimmerfernseher an.

Wenn ich in Wohnzimmer bin,
schalte den Wohnzimmerfernseher an".

Dieses Beispiel setzt voraus, dass in den System bereits Zeichenketten-Programmcode-Komponenten vorliegen, die eine bedingte Anweisung ("Wenn ...") implementieren sowie eine Lokation des Nutzers ("im Wohnzimmer...", "im Arbeitszimmer"), eine regelbare Betätigung der Beleuchtung ("stelle die Helligkeit der Raumbeleuchtung auf Vollmondnacht") und der Jalousie ("Lasse die Jalousien herunter") und eine Betätigung verschiedener Fernsehgeräte ("schalte den Arbeitszimmerfernseher an", "schalte den Wohnzimmerfernseher an"), und über entsprechende Definitionszeichenketten ansprechbar sind.

In Fig. 5 sind Komponenten eines Systems 200 schematisch dargestellt, welches ein Programmieren in natürlicher Sprache erlaubt.

Programmieren in natürlicher Sprache basiert im vorliegenden Kontext wesentlich auf einer Datenstruktur, welche als Zeichenketten-Programmcode-Komponente bezeichnet wird, und welche vorstehend bereits grundsätzlich beschrieben worden ist.

Das System 200 umfasst eine Steuereinrichtung 260 mit einem Speicherbereich 270, eine Eingabeeinrichtung 240, einen Speicherbereich 230 sowie einen Codegenerator 282 und einen Compiler 284. Aufgaben und Funktionalitäten der einzelnen Komponenten werden im Folgenden erläutert.

Die Eingabeeinrichtung 240 dient einem Anwender des Systems dazu, eine Eingabe in das System einzugeben. Die Eingabe erfolgt, wie nachfolgend dargelegt, in natürlicher Sprache, mittels einer Programmierzeichenkette in natürlicher Sprache, wie beispielsweise "Addiere zwei Zahlen". Die Eingabe kann über eine Tastatur oder dergleichen erfolgen oder über Spracheingabe.

Die Eingabeeinrichtung 240 umfasst einen Editor 250, welcher, wie nachfolgend dargelegt, eine Kommunikation eines Anwenders mit dem System 200 unterstützt. Der Editor 250 umfasst in der Regel eine Ausgabeeinrichtung, z.B. ein Display, in dem die Eingabe des Nutzers sowie Ausgaben der Steuereinrichtung 260 ausgegeben werden können.

Eine Zeichenketten-Programmcode-Komponente 210, 210', 210"ist mit Bezug zu Fig. 1 bereits beschrieben worden. Die Wirkungsweise und die Vorteile der Verwendung einer Methode 16 zur Parametereingabe werden nachfolgend mit Bezug zu einem einfachen Beispiel erkennbar.

Eine Zeichenketten-Programmcode-Komponente implementiert eine Methode "collectParameter()" zum Aufbau und Sammeln der Parameter. Das Programmcodesegment der Zeichenketten-Programmcode-Komponente implementiert in dem Beispiel eine Funktionalität zum Ausgeben der Uhrzeit an einem oder mehreren Orten, die als Parameter eingegeben werden können:

```
public class WhatTime: SentenceComponent
{
    public:
            String getSentence();
            String collectParameter(String *sentence,
                                         String *suggestions,
                                         String receivedWord);
            /* Markierung: nameRueckgabe =>
                               "aktuelle Zeit der Städte" */
            String excecuteCodesegment();
            Private:
                    List<String> selectedCities;
    }
    public String WhatTime:: getSentence ()
    {
            return "Wie spät ist es in den folgenden Städten?"
    }
```

Die Methode 16 zur Parametereingabe hat die folgende Form:

```
public String WhatTime::collectParameter(String *sentence,
                                            String *suggestions,
                                            String receivedWord);
    {
```

```
        if (!sentence.isEmpty())
         {
                sentence = "Wie spät ist es";
                return "ok";
         }
        if (sentens.endsWith("?"))
         {
                sentence.replaceLastCommaWith(" und ");
                    return "EndOfSentence";
                }
                if (receivedWord == "Schweiz"))
                {
                        selectedCities.add("Schweiz")
                        sentence = sentence + "in der Schweiz";
                        return "ok";
                }
                else if (receivedWord == "Malta"))
                {
                        selectedCities.add("Malta")
                        sentence = sentence + "auf Malta";
                        return "ok";
                }
                else if (receivedWord == "London"))
                {
                        selectedCities.add("London")
                        sentence = sentence + "in London";
                        return "ok";
                }
                else
                {
                        suggestions = "(Suggestion: Paris),
                                  (Suggestion: London),
                                  (Suggestion: Schweiz),
                                  (Suggestion: Malta)";
                        Return "(Error: Ihr Angabe ist falsch!)";
                }
         }
      public String WhatTime::excecuteCodesegment() {
                String timeInCities = "Die Ausgabe der Uhrzeit für
                                  folgende Städte: ";
                for(int i; sizeOf(selectedCities) < i; i++)
                {
        timeInCities = timeInCities + selectedCities[i] + ": " +
                        Date.getTime(selectedCities[i]).toString();
                }
                    return timeInCities;
         }
```

Wird als Programmierzeichenkette oder Eingabezeichenkette, z.B. über einen Editor, "wie spät" eingegeben, wird das System über einen Matching-Algorithmus in der Menge der vorliegenden Zeichenketten-Programmcode-Komponenten nach einer Übereinstimmung suchen - und eine partielle Übereinstimmung finden mit der Definitionszeichenkette der vorstehend angegebenen Zeichenketten-Programmcode-Komponente: "Wie spät ist es in den folgenden Städten?" Das System ruft daraufhin die Methode "collectParameter" dieser Zeichenketten-Programmcode-Komponente auf.

Die Methode collectParameter prüft anhand des folgenden Programmcodes, ob der Satz korrekt startet, wenn nicht, wird er korrigiert:

```
                if (!sentence.isEmpty())
                {
                        sentence = "Wie spät ist es";
                        return "ok";
                }
```

Mit den Rückgabewert "ok" gibt der Editor dem System Bescheid, dass die Angabe korrekt ist. Das Systen gibt seinerseits den Inhalt des Arguments "sentence" an den Editor. Der Editor stellt die Korrektur im Editor dar und wartet auf die Eingabe des Benutzers. Gibt der Benutzer das Wort "Schweiz" an, sendet der Editor diese Eingabe an das System weiter. Das System weist dem Argument "receivedWord" das Wort "Schweiz" zu und ruft die Methode "collectParameter" wieder auf.

Die Methode 16 zur Parametereingabe korrigiert anhand des folgenden Programmcodes die Grammatik und fügt einen Eintrag in der Liste der selektierten Städte hinzu:

```
if (receivedWord == "Schweiz"))
 {
        selectedCities.add("Schweiz")
        sentence = sentence + "in der Schweiz, ";
        return "ok";
 }
```

Somit wird im Editor die Aussage "Wie spät ist es in der Schweiz, " dargestellt.

Angenommen, der Benutzer gibt "Matta" ein, so wird die Methode "collectParameter" erneut aufgerufen. Da das Wort "Matta" keine gültige Stadt ist, wird daher durch folgenden Programmcode der Methode 16 zur Parametereingabe eine Fehlermeldung erzeugt und einige Korrekturvorschläge an das System übergeben:

```
else
 {
        suggestions = "(Suggestion: Paris),
              (Suggestion: London),
              (Suggestion: Schweiz),
              (Suggestion: Malta)";
       Return "(Error: Ihr Angabe ist falsch!)";
 }
```

Das System gibt die Fehlermeldung und Vorschläge an den Editor weiter. Der Editor gibt die Fehlermeldung und die Vorschläge aus:

| NSC Programming Editor | **Haltepunkt hizufügen** | ←Rückwärts    Vorwärts → |
|---|---|---|
| Wie spät ist es in der Schweiz, Matta<br><br>Paris<br>London<br>Malta | Für Ihre Angabe wurde keine Stadt gefunden. Bitte wählen Sie eine Stadt | |

Der Benutzer korrigiert daraufhin seine Angabe mit "Malta" und der Editor sendet die korrigierte Eingabe an das System weiter. Der Kontroller weist dem "receivedWord" das Wort "Malta" und ruft die Methode "collectParameter" erneut auf. Durch den folgenden Programmcode wird ein weiterer Eintrag in der Liste der selektierten Städte hinzugefügt und der Satz grammatikalisch korrigiert:

```
else if (receivedWord == "Malta"))
 {
        selectedCities.add("Malta")
        sentence = sentence + "auf Malta";
        return "ok";
 }
```

Der Satz sieht nun so aus: "Wie spät ist es in der Schweiz, auf Malta". Der Benutzer gibt mit dem Fragezeichen das Ende des Satzes an. Der Editor sendet diese Eingabe an das System. Die Methode "collectParameter" wird erneut aufgerufen. Durch folgenden Programmcode wird der Satz wieder grammatikalisch korrigiert und mit dem Rückgabewert "EndOfSentence" wird dem System signalisiert, dass die Parametereingabe beendet ist.

```
if (sentens.endsWith("?"))
{
        sentens.replaceLastCommaWith(" und ");
        return "EndOfSentence";
}
```

Das System sendet den Inhalt des Arguments "sentence" an den Editor. Der Editor zeigt den Satz an und wartet auf die Angaben von Benutzer.

| NSC Programming Editor | **Haltepunkt hinzufügen** | →Rückwärts Vorwärts → |
| --- | --- | --- |
| Wie spät ist es in der Schweiz und auf Malta? | | |

Alternativ zur Verwendung einer Methode 16 zur Parametereingabe kann eine Eingabe von Parametern auch auf andere Weise, mit Hilfe der Steuereinrichtung 260, erfolgen. Hierfür wird eine Methode einer Zeichenketten-Programmcode-Komponente beispielsweise mit der Markierung "partOfSentence" markiert. Die Methode hat einen Eingabeparameter und keinen Rückgabewert.

```
/* Markierung: partOfSentence = "eine Zeichenkette" */
void setOutput( String output);
```

Auf diese Weise teilt die Zeichenketten-Programmcode-Komponente 210 der Steuereinrichtung 260 mit, einen Teil der Definitionszeichenkette als Parameter zu interpretieren und das Erfassen des Parameters zu übernehmen. Der erfasste Parameter muss dann vom Codegenerator 282 an diese Methode zugewiesen werden (im Folgenden erscheint in dem exemplarisch angegebenen Programmcode-Beispielen statt "Zeichenketten-Programmcode-Komponente" auch der Begriff "SentenceComponent", welcher synonym zu verstehen ist).

```
public class PrintText: public SentenceComponent {
        public:
        String getSentence();
        void executeCodesegment();
        /* Markierung: partOfSentence = „eine Zeichenkette" */
        void setOutput ( String output );
        private:
        String outputString;
}
public void PrintText:: setOutput( String output ){
        outputString = output;
}
public PrintText:: getSentence (){
    return „gebe eine Zeichenkette auf dem Bildschirm aus."
}
public String PrintText::executeCodesegment() {
    println( outputString );
}
```

Wird die oben dargestellte neue Zeichenketten-Programmcode-Komponente 210 "gebe eine Zeichenkette auf dem Bildschirm aus." in das System 200 integriert, so wird sie nach einer Analyse in eine Registrierungstabelle eingetragen. Die Steuereinrichtung 260 erkennt durch die während der Registrierung erfasste Markierung, dass der Wert des Satzteiles "eine Zeichenkette" als Argument der Methode "setOutput( String Output)" zugewiesen werden muss.

Wird allgemein eine neue Zeichenketten-Programmcode-Komponente 210 in das System 200 integriert, kann diese von einem Metadatenanalysator (nicht gezeigt) analysiert und die entsprechenden Metadaten für die weitere Nutzung vorgehalten.

Zu den Metadaten gehören z.B. Klassennamen, Basisklassen, Methoden und Variablen. Wird beispielsweise

eine Zeichenketten-Programmcode-Komponente in C++ geliefert, wird durch Parsen der mitgelieferten Deklaration der Klasse und deren Methoden nach einer Klasse gesucht, die die abstrakte Klasse "SentenceComponent" implementiert. Somit erkennt ein C++ Metadatenanalysator die Klasse als Zeichenketten-Programmcode-Komponente. Dabei wird die Methode "getSentence" aufgerufen und die Definitionszeichenkette inklusive Klassenname in einer Metadaten-Tabelle eingetragen. Damit ist die Zeichenketten-Programmcode-Komponente im System integriert und kann zum Programmieren in natürlicher Sprache verwendet werden.

Metadatenanalysatoren, die es für beliebige gängige Programmiersprachen gibt, beherrschen Techniken, die es ermöglichen, an alle Informationen über öffentliche Elemente einer Zeichenketten-Programmcode-Komponente zu gelangen. Für C++ wird dazu die Deklarationsdatei der Zeichenketten-Programmcode-Komponente geparst, um Metadaten zu entnehmen. Moderne herkömmliche Programmiersprachen stellen selbst diese Technik zur Verfügung. In Java beispielsweise werden durch "Reflection" alle Metadaten einer Klasse zur Verfügung gestellt.

Eine Zeichenketten-Programmcode-Komponente 210 zum Ausgeben der aktuellen Zeit könnte beispielsweise die folgende Form haben:

```
public class LocalTime: SentenceComponent {
     public:
              String getSentence();
              Time executeCodesegment();
}
public String LocalTime:: getSentence (){
              return "Wie spät es ist?"
}
public String LocalTime::executeCodesegment() {
              return Date.getTime();
}
```

Die Metadaten der Methode executeCodesegment () in Programmiersprache C++ kann demnach wie folgt aussehen:

Programmiersprache = c++
Headerdatei = WhatTime.h
Klassenname = WhatTime
Methodenname = executeCodesegment
Type des Rückgabewertes = Time
Argumente = keins

Der Metadatenanalysator stellt auch für den Rückgabewert "Time" die Metadaten zur Verfügung:

Programmiersprache = c++
Headerdatei = time.h
Klassenname = Time

Somit verfügen der Metadatenanalysator und die Steuereinrichtung über alle Metadateninformationen einer Zeichenketten-Programmcode-Komponente.

Die Methode executeCodesegment() dient allgemein dazu, die eigentliche Funktionalität einer Zeichenketten-Programmcode-Komponente 210 zu implementieren, beispielsweise eine als Parameter erfasste Zeichenkette auszugeben oder zwei Zahlen zu addieren.

Ein Verfahren zum Programmieren in natürlicher Sprache soll im Folgenden, etwas detaillierter als mit Bezug zu Fig. 4, exemplarisch an einem weiterhin einfachen Beispiel mit Bezug auf Fig. 6 erläutert werden.

In einem ersten Schritt S601 werden eine Mehrzahl von Zeichenketten-Programmcode-Komponenten 210, 210', 210" in vorstehend bereits beschriebener Weise in dem System 200 bereitgestellt und registriert, wie beispielsweise die Zeichenketten-Programmcode-Komponenten zum Bereitstellen der aktuellen Uhrzeit oder zur Ausgabe einer Zeichenkette auf einem Bildschirm.

In einem zweitem Schritt S602 gibt ein Anwender des Systems 200 eine Programmierzeichenkette in natürlicher Sprache über die Eingabeeinrichtung 240 in das System 200 ein.

Die Programmierzeichenkette kann beispielsweise beginnen mit "Wie spät...".
Die Steuereinrichtung 260 erkennt die Eingabe und vergleicht laufend die bereits eingegebenen Anteile der Programmierzeichenkette mit Definitionszeichenketten von in dem System vorliegenden Zeichenketten-Programmcode-Komponenten 210, 210', 210". Im vorliegenden Beispiel würde die Steuereinrichtung 260 erkennen, dass es eine Zeichenketten-Programmcode-Komponenten 210 gibt mit der Definitionszeichenkette "Wie spät ist es?" und würde den Anwender diese Zeichenketten-Programmcode-Komponenten zur Verwendung vorschlagen. Dieser Vorschlag könnte beispielsweise über den Editor 250 ausgegeben werden. Im vorliegenden Beispiel übernimmt der Anwender diesen Vorschlag.

Die Zeichenketten-Programmcode-Komponente mit der Definitionszeichenkette "Wie spät ist es?" wird somit ausgewählt, weil die Programmierzeichenkette "wie spät..." zumindest eine Teilzeichenkette der Definitionszeichenkette umfasst.

Die Programmierzeichenkette wird dann entsprechend ergänzt zu "wie spät ist es?". Die Programmierung in natürlicher Sprache kann fortgesetzt werden, beispielsweise indem der Anwender eingibt "gebe ...".

Die Steuereinrichtung 260 erkennt erneut eine Definitionszeichenkette, die mit dieser Programmierzeichenkette teilweise übereinstimmt, nämlich "gebe **eine Zeichenkette** auf dem Bildschirm aus", und schlägt die Verwendung der entsprechenden Zeichenketten-Programmcode-Komponente vor. Wenn der Anwender akzeptiert, was der Fall sei, übernimmt in diesem Fall die Steuereinrichtung 260, wie vorstehend allgemein beschrieben, die Erfassung des Parameters "eine Zeichenkette" und erwartet an dieser Stelle, dass der Anwender entweder eine in Hochkomma eingeschlossene Zeichenkette oder eine Variable vom Datentyp "String" eingibt.

Der Benutzer gibt "aktuelle Uhrzeit" (den Rückgabewert von Zeichenketten-Programmcode-Komponente "Wie spät ist es?") ein. Die Programmierzeichenkette wird daraufhin ergänzt zu: "wie spät ist es? gebe die aktuelle Uhrzeit auf dem Bildschirm aus."

An dieser Stelle zeigen sich zwei vorteilhafte Aspekte des beschriebenen Verfahrens. Zeichenketten-Programmcode-Komponente können Werte zurückgeben (eine Zeitangabe, die die aktuelle Uhrzeit angibt). Solche Rückgabewerte können seitens des Systems 200 gespeichert werden, z.B. in einem Speicher 270. Vorzugsweise werden solche Rückgabewerte mittels natürlicher Sprache annotiert, im vorliegenden Fall mit "aktuelle Uhrzeit". Auf diese Weise können nachfolgende Zeichenketten-Programmcode-Komponenten nicht nur grundsätzlich, sondern auf einfache Weise, mittels natürlicher Sprache, durch Spezifikation des Parameters "eine Zeichenkette" durch den natürlichsprachlichen Ausdruck "aktuelle Uhrzeit", auf solche Rückgabewerte zurückgreifen.

Das vorstehende Beispiel zeigt auch, dass die Schritte des Eingebens der Programmierzeichenkette sowie des Auswählens einer Zeichenketten-Programmcode-Komponente sich mehrfach abwechseln können. Weiterhin kann eine Parameterabfrage und - eingabe während des Eingebens und/oder nach dem Eingeben der Programmierzeichenkette erforderlich sein.

In dem Fall, dass der Anwender signalisiert, dass die Eingabe der Programmierzeichenkette abgeschlossen ist, wird in Schritt S604 ein der Programmierzeichenkette zugeordnetes Programm auf Basis der Programmcodesegmente der ausgewählten Zeichenketten-Programmcode-Komponenten erzeugt.

Dazu generiert der Codegenerator 282 für beiden Zeichenketten-Programmcode-Komponenten z.B. den folgenden Programmcode:

```
#include "WhatTime.h"
#include "PrintText.h"
WhatTime whatTime_l= new WhatTime ()
String result_l = whatTime_l.excecuteCodesegment();
PrintText printText_l = new PrintText()
printText_l.setOutput( result_l );
printText_l.excecuteCodesegment();
```

Dabei entspricht die Variable result_1 dem Rückgabewert "aktuelle Uhrzeit" der Zeichenketten-Programmcode-Komponente "wie spät ist es?". Der entsprechende C++ Compiler 284 kompiliert den vorstehenden Programmcode und legt diesen als eine ausführbare Datei in einen dazu vorgesehen (nicht gezeigten) Speicher des Systems 200. Wird die ausführbare Datei ausgeführt, erscheint auf dem Bildschirm die aktuelle Uhrzeit.

Die arithmetischen Berechnungen können mittels einer Programmierzeichenkette in natürlicher Sprache, beispielsweise in der Form "Addiere 20 mit 5 und ziehe Wurzel aus der Additionsergebnis", oder auch - wie in der Mathematik üblich - über mathematische Notation angegeben werden. Beispielsweise wie folgt:

$$Additionsergebnis = 20 + 5$$

$$Wurzelergebnis = \sqrt{Additionsergebnis}$$

Neben grafischer Darstellung aller mathematischen Symbole ist möglich, zuvor gewonnene Ergebnisse als Variablen in Formel für die weitere Berechnung einzusetzen. Die Ergebnisse können ebenfalls als Parameter in der darauf folgenden Zeichenketten-Programmcode-Komponente eingesetzt werden.

Es versteht sich, dass die Programmiersprache, in der die Programmcodesegmente der einzelnen Zeichenketten-Programmcode-Komponenten erstellt sind, verschieden sein kann von der Programmiersprache, in welcher der Codegenerator den Programmcode für das mittels natürlicher Sprache in der vorstehenden Weise programmierte Programm erstellt. Sind die beiden Programmiersprachen unterschiedlich, so fügt der Codegenerator im Programmcode der Zielprogrammiersprache Mechanismen hinzufügen, die es ermöglichen, die Programmcodesegmente in Fremdprogrammiersprache, beispielweise über einen Proxy, aufzurufen.

Wie bereits erwähnt, kann das System Codegeneratoren und Compiler für verschiedene Zielprogrammiersprachen (C++, C#, Java, etc.) und Ausführungsplattformen (Windows, Linux, Android, etc.) umfassen, die vom Anwender wahlweise verwendet werden können. Im Folgenden werden exemplarisch weitere Aspekte des in diesem Dokument vorgeschlagenen Verfahrens beschrieben.

Kontrollstrukturen, insbesondere bedingte Anweisungen, sind essentielle Bestandteile herkömmlicher Programmiersprachen. Wie nachfolgend exemplarisch dargestellt, können mittels des hier vorgeschlagenen Verfahrens zum Programmieren in natürlicher Sprache solche Kontrollstrukturen in vollem Funktionsumfang bereitgestellt werden. Bedingte Anweisungen werden ebenfalls als Zeichenketten-Programmcode-Komponenten implementiert. Hierfür kann die Methode executeCodesegment(), z.B. im Falle einer IF-Anweisung, mit der Markierung controlFlow = "IF" markiert sein. Damit wird der Codegenerator 282 angewiesen, die Methode executeCodesegment() als Bedingung eines IF-Statements einzutragen:

```
if ( classX.executeCodesegment() ){
     // hier wird durch Codegenerator der
     // Source Code anderer Zeichenketten-Programmcode-Komponenten
     // eingetragen.
}
```

Generische Bedingungen der Form "a < b" können auf einfache Weise dadurch implementiert werden, dass die entsprechende Zeichenketten-Programmcode-Komponente eine Methode zum Abfragen von Parametern aufweist, welche eingerichtet ist, Operanden und Operator einer solchen Bedingung während des Programmierens in natürlicher Sprache abzufragen. Anzahl und Art der Operanden und Operatoren können dabei variieren und ebenfalls während des Programmierens abgefragt werden. Auf diese Weise können beliebige bedingte Aussagen gebildet werden.

Zeichenketten-Programmcode-Komponenten erlauben überdies, Bedingungen zu prüfen, die nicht dem generischen Schema folgen, sondern der natürlichen Sprache näherliegen, beispielsweise eine Bedingung der Form "wenn es draußen hell ist, dann ...". Diese kann z.B. mittels einer Zeichenketten-Programmcode-Komponente wie folgt realisiert werden:

```
public class MyFirstIF: SentenceComponent {
     public:
             String getSentence();
             /* Markierung: controlFlow = "IF" */
            boolean executeCodesegment();
}
public String MyFirstIF:: getSentence (){
             return "Wenn es draußen hell ist, dann ..."
}
public boolean MyFirstIF:: executeCodesegment(){
     OutdoorBrightnessSensor sensor = new OutdoorBrightnessSensor();
     boolean brightness = sensor.isBright();
     if ( brightness == true ) {
                 return true;
      }
     else {
                 return false;
      }
}
```

Die Klasse "OutdoorBrightnessSensor" betrifft einen Außenlichtintensitätssensor. Die Methode "isBright()" misst die Helligkeit und gibt "true" zurück, falls die Helligkeit eine vorgegebene Intensität nicht unterschreitet.

Der Codegenerator erzeugt dafür folgenden Programmcode in C++:

```
#include "MyFirstIF.h"
MyFirstIF myFirstIF_1 = new MyFirstIF ();
if (myFirstIF _1.executeCodesegment() ){
    // hier wird durch Codegenerator der
    // Source Code anderer Zeichenketten-Programmcode-Komponente
    // eingetragen.
}
```

Gibt die Methode executeCodesegment() einen booleschen Wahrheitswert "true" zurück, werden die Anweisungen innerhalb des Blockes ausgeführt. Diese Anweisungen kommen von Zeichenketten-Programmcode-Komponenten, die ausgewählt werden aufgrund einer nach dem Begriff "dann" eingegebenen Programmierzeichenkette.

Gemäß einem weiteren Aspekt kann eine Teilmenge von Zeichenketten-Programmcode-Komponenten technisch in einem Modul zusammengefasst werden. Bei der Registrierung eines Moduls im System werden alle in diesem Modul enthaltenen Zeichenketten-Programmcode-Komponenten in der Metadaten-Tabelle zu einer Gruppe zusammengefasst.

| Definitionszeichenkette | Gruppe | Klasse |
|---|---|---|
| Erstelle eine Anwendung | Anwendung1 | MyApplication |
| Füge ein Eingabefeld ein | Anwendung1 | MyTextField |
| Füge eine Schaltfläche ein | Anwendung1 | MyButtom |

Alle Zeichenketten-Programmcode-Komponenten innerhalb einer Gruppe kennen die Schnittstellen der anderen Zeichenketten-Programmcode-Komponenten. Zwischen Zeichenketten-Programmcode-Komponenten einer Gruppe können implizite Beziehungen angenommen werden. Die Zeichenketten-Programmcode-Komponente "Füge ein Eingabefeld ein" wird implizit auf die Zeichenketten-Programmcode-Komponenten "Erstelle Anwendung" bezogen; folglich wird ein erzeugtes Eingabefeld der erstellten Anwendung zugeordnet, ohne dass ein einzugebender Parameter dies erst explizit bestimmen muss. Weiterhin kann die Steuereinrichtung 260 aufgrund der Gruppierung einen Rückgabewert einer ersten Zeichenketten-Programmcode-Komponente einer darauf folgenden Zeichenketten-Programmcode-Komponente in derselben Gruppe implizit zuweisen.

Ein weiterer Aspekt, der auch mittels Programmierung in natürlicher Sprache in der hier vorgeschlagenen Form erfasst werden kann, ist die parallele Verarbeitung verschiedener Aufgaben.

Zu Steuerung komplexer Systeme, beispielsweise zur Steuerung eines humanoiden Roboters, müssen häufig mehrere Programmabläufe gleichzeitig ablaufen. Dabei handelt es sich um mehrere Prozesse zur gemeinsamen Behandlung einer Aufgabe. Parallelisierung von Programmabläufen ist in modernen Programmiersprachen einfach realisierbar. In Java wird beispielsweise zur Programmierung eines Prozesses die abstrakte Klasse "Thread" mit der einzigen Methode run() zur Implementierung eines parallel auszuführenden Programmcodes zur Verfügung gestellt.

```
Public MyThread_1 implements Thread{
    public void run()
     {
     }
}
```

Um einen Prozess zu generieren, muss eine neue Klasse erzeugt werden, die die abstrakte Klasse Thread und deren Methode run() implementiert. Danach muss eine Instanz der Klasse erzeugt werden und anschließend die Methode start() der Klasse "Thread" aufgerufen werden. Beispielweise für eine Zeichenketten-Programmcode-Komponente mit der Definitionszeichenkette "Lasse die Jalousien herunter" wird, unter Voraussetzung, dass deren Klassenname "JalousieDown" ist, folgender Programmcode generiert:

```
Public MyThread_l implements Thread{
    public void run()
     {
            JalousieDown jalousieDown_1 = new JalousieDown();
            jalousieDown_1.executeCodesegment();
     }
}
```

Durch folgende Zeichenketten-Programmcode-Komponente, angegeben durch die Definitionszeichenketten, kann eine einfache parallele Aufgabe realisiert werden.

Mache folgendes parallel:
stelle die Helligkeit der Raumbeleuchtung auf Vollmondnacht.
Lasse die Jalousien herunter

Durch die Eingabe der Definitionszeichenkette "Mache folgendes parallel" erzeugt der Java Codegenerator für jede Zeichenketten-Programmcode-Komponente jeweils einen Prozess und fügt die entsprechende Zeichenketten-Programmcode-Komponente innerhalb der Methoden run() hinzu.

```
Public MyThread_1 implements Thread{
    public void run()
      {
            LightDeamer lightDeamer_1 = new LightDeamer();
            lightDeamer_1.setLight( "Vollmondnacht" );
            lightDeamer_1.executeCodesegment();
      }
  }
            Public MyThread_2 implements Thread{
    public void run()
      {
            JalousieDown jalousieDown_1 = new JalousieDown();
            jalousieDown_1.executeCodesegment(); }
  }
            MyThread_1.Start();
            MyThread_2.Start();
```

Somit werden die beiden Zeichenketten-Programmcode-Komponenten, d.h. die durch die jeweiligen Programmcodesegmente implementierten Funktionalitäten, mit Ausführung der Methode start() gleichzeitig laufen.

Wie bereits mehrfach angedeutet, besteht mittels des beschrieben Verfahrens auch die Möglichkeit, aus bestehenden Zeichenketten-Programmcode-Komponenten neue Zeichenketten-Programmcode-Komponenten zu erzeugen.

Um eine neue Zeichenketten-Programmcode-Komponente zu erstellen, werden für eine neue Definitionszeichenkette eine oder mehrere elementare Zeichenketten-Programmcode-Komponente angegeben. Der Codegenerator 282 erstellt hierzu für die neue Zeichenketten-Programmcode-Komponente eine Methode "getSentence" zur Rückgabe der neuen Definitionszeichenkette und eine Methode "executeCodesegment()" zum Implementieren einer Funktionalität, welche eine Kombination der Funktionalitäten darstellt, die die einzelnen Zeichenketten-Programmcode-Komponente bereitstellen, die zum Erzeugen der neuen Zeichenketten-Programmcode-Komponente herangezogen werden.

Gemäß einem sehr einfachen, nur exemplarischen Beispiel könnte zur neuen Definitionszeichenkette "Bildschirmzeitausgabe" eine Zeichenketten-Programmcode-Komponente erzeugt werden, basierend auf den beiden bereits erläuterten Zeichenketten-Programmcode-Komponenten "wie spät ist es?" und "gebe eine Zeichenkette auf dem Bildschirm aus".

Eine entsprechende Programmierzeichenkette könnte beispielsweise lauten:

"Erzeuge neue Zeichenketten-Programmcode-Komponente zu der Definitionszeichenkette D und der Programmierzeichenkette P",
wobei D und P jeweils als Parameter vom Typ Zeichenkette entsprechen.
Die Spezifikation D = "Bildschirmzeitausgabe", P =""wie spät ist es? gebe eine Zeichenkette auf dem Bildschirm aus", hätte den erwünschten Effekt:
Es wird eine neue Zeichenketten-Programmcode-Komponente erzeugt mit der Definitionszeichenkette "Bildschirmzeitausgabe". Das Programmcodesegment entspricht dem Programmcode, den der Codegenerator erzeugt, wenn zum Programmieren in natürlicher Sprache, wie vorstehend beschrieben, die Programmierzeichenkette "wie spät ist es? gebe eine Zeichenkette auf dem Bildschirm aus" eingegeben wird.

**Patentansprüche**

1. Verfahren zum Programmieren in natürlicher Sprache, umfassend die Schritte:

- Bereitstellen (S1) einer Mehrzahl von Zeichenketten-Programmcode-Komponenten (10, 10', 10") in einem System (100), wobei eine Zeichenketten-Programmcode-Komponente (10) jeweils umfasst:

  - eine Definitionszeichenkette (12), die einen Ausdruck (13) in natürlicher Sprache umfasst, und
  - ein der Definitionszeichenkette (12) eindeutig zugeordnetes Programmcodesegment (14), welches eine dem Ausdruck (13) in natürlicher Sprache zugeordnete Funktionalität implementiert,

- Eingeben (S602) einer Programmierzeichenkette in natürlicher Sprache;
- Auswählen (S603) zumindest einer Zeichenketten-Programmcode-Komponente (210) aus der Mehrzahl der Zeichenketten-Programmcode-Komponenten, wenn die Programmierzeichenkette zumindest eine Teilzeichenkette der Definitionszeichenkette der zumindest einen Zeichenketten-Programmcode-Komponenten umfasst;
- Erzeugen (S604) eines der Programmierzeichenkette zugeordneten Programms auf Basis des Programmcodesegments der zumindest einen ausgewählten Zeichenketten-Programmcode-Komponente.

2. Verfahren nach Anspruch 1, wobei mehrere Zeichenketten-Programmcode-Komponenten aus der Mehrzahl der Zeichenketten-Programmcode-Komponenten ausgewählt werden, wenn die Programmierzeichenkette zumindest eine Teilzeichenkette der Definitionszeichenkette jeder der mehreren ausgewählten Zeichenketten-Programmcode-Komponenten umfasst, und wobei ein der Programmierzeichenkette zugeordnetes Programm auf Basis der Programmcodesegmente der mehreren ausgewählten Zeichenketten-Programmcode-Komponenten erzeugt wird.

3. Verfahren nach Anspruch 1 oder 2, wobei zumindest eine der Zeichenketten-Programmcode-Komponenten aus der Mehrzahl der Zeichenketten-Programmcode-Komponenten eine Methode (16) zur Parametereingabe umfasst, welche von einer Steuereinrichtung des Systems (100) bei einer Verarbeitung der Zeichenketten-Programmcode-Komponente durch das System aufgerufen wird, wodurch diese Zeichenketten-Programmcode-Komponente eingerichtet ist, eine Parametereingabe zu unterstützen, mittels welcher die durch das Programmcodesegment dieser Zeichenketten-Programmcode-Komponente bereitgestellte Funktionalität spezifiziert werden kann, und wobei vorzugsweise eine durch das Programmcodesegment zumindest einer der Zeichenketten-Programmcode-Komponenten aus der Mehrzahl der Zeichenketten-Programmcode-Komponenten bereitgestellte Funktionalität, wenn diese Funktionalität durch das System ausgeführt wird, einen Rückgabewert liefert, wobei dieser Rückgabewert vorzugsweise natürlichsprachlich annotiert ist, und wobei zumindest eine weitere Zeichenketten-Programmcode-Komponente aus der Mehrzahl der Zeichenketten-Programmcode-Komponenten, wenn die durch das Programmcodesegment dieser weiteren Zeichenketten-Programmcode-Komponente bereitgestellte Funktionalität durch das System ausgeführt wird, auf den Rückgabewert zugreift, insbesondere als Parameter zum Spezifizieren der durch das Programmcodesegment der weiteren Zeichenketten-Programmcode-Komponente bereitgestellten Funktionalität, wobei der Zugriff auf den Rückgabewert auf Basis einer natürlichsprachlichen Annotation des Rückgabewerts erfolgen kann.

4. Verfahren nach Anspruch 3, wobei das System (100) eingerichtet ist, bei Empfangen einer Eingabezeichenkette, welche gemäß einem vorgegebenen Ähnlichkeitsmaß eine vorgegebene Ähnlichkeit zu der Definitionszeichenkette (12) aufweist, die durch das Programmcodesegment (14) implementierte Funktionalität auszuführen, wobei das Programmcodesegment (14) vorzugsweise eine Funktionalität zum Steuern eines mit dem System (100) gekoppelten Geräts (30; 32; 34; 36) implementiert oder wobei das Programmcodesegment (14) oder die Methode zur Parametereingabe vorzugsweise einen Dialog zwischen der Zeichenketten-Programmcode-Komponente (10) und einem Nutzer (42) implementiert.

5. Verfahren nach Anspruch 4, wobei, wenn das Programmcodesegment (14) oder die Methode zur Parametereingabe einen Dialog zwischen der Zeichenketten-Programmcode-Komponente (10) und einem Nutzer (42) implementieren, der Dialog einer Parametereingabe zum Spezifizieren der seitens des Programmcodesegments (14) implementierten Funktionalität dient oder der Dialog eine Konversation zwischen dem Nutzer (42) und der Zeichenketten-Programmcode-Komponente (10) unterstützt.

6. Verfahren nach einem der Ansprüche 1 bis 5, wobei das Programmcodesegment (14) eine Funktionalität zum Übermitteln einer Eingabezeichenkette an das System (100) implementiert.

7. Verfahren nach einem der Ansprüche 1 bis 6, umfassend die weiteren Schritte:

  - Empfangen (S2) einer Eingabezeichenkette durch das System (100);
  - Vergleichen (S3) der Eingabezeichenkette mit der Definitionszeichenkette (12) gemäß dem vorgegebenen Ähnlichkeitsmaß durch das System (100); und

- Ausführen (S4) der durch das Programmcodesegment (14) implementierten Funktionalität durch das System (100), falls die Eingabezeichenkette die vorgegebene Ähnlichkeit zu der Definitionszeichenkette (12) gemäß dem vorgegebenen Ähnlichkeitsmaß aufweist.

8. Verfahren nach Anspruch 7, umfassend die weiteren Schritte:

- Speichern einer empfangenen Eingabezeichenkette;
- Auslesen der gespeicherten Eingabezeichenkette zum Unterstützen des nachfolgenden Ausführens einer durch ein Programmcodesegment (14) einer Zeichenketten-Programmcode-Komponente (10; 10') implementierten Funktionalität, wobei eine empfangene Eingabezeichenkette vorzugsweise innerhalb einer Zeichenketten-Programmcode-Komponente gespeichert wird und zum Unterstützen des nachfolgenden Ausführens der durch das Programmcodesegment (14) der Zeichenketten-Programmcode-Komponente (10; 10') implementierten Funktionalität durch die Zeichenketten-Programmcode-Komponente ausgelesen wird.

9. Verfahren nach einem der Ansprüche 7 oder 8, umfassend die weiteren Schritte:

- Speichern einer empfangenen Eingabezeichenkette;
- Ableiten einer Kontextinformation aus der Eingabezeichenkette mittels der durch das Programmcodesegment implementierten Funktionalität; und
- Speichern der Kontextinformation in dem System.

10. Verfahren nach einem der Ansprüche 1 bis 9, wobei einem Parameter, mittels welchem die durch das Programmcodesegment einer Zeichenketten-Programmcode-Komponente bereitgestellte Funktionalität spezifiziert werden kann, ein definierbarer Parametertyp zugeordnet wird.

11. Verfahren nach einem der Ansprüche 1 bis 10, wobei das Programmcodesegment zumindest einer der Zeichenketten-Programmcode-Komponenten aus der Mehrzahl der Zeichenketten-Programmcode-Komponenten eine einen Ablauf eines Programms steuernde Kontrollstruktur implementiert, wobei das Programmcodesegment eine bedingte Anweisung implementieren kann, und wobei die die bedingte Anweisung definierende Bedingung mittels der durch das Programmcodesegment der Zeichenketten-Programmcode-Komponente implementierten Funktionalität abgefragt wird, oder wobei das Programmcodesegment eine bedingte Anweisung implementiert, und wobei die die bedingte Anweisung definierende Bedingung durch zumindest einen Operator und zumindest einen Operanden definiert wird wobei der zumindest eine Operator und der zumindest eine Operand vorzugsweise als Parameter zum Spezifizieren der durch das Programmcodesegment der Zeichenketten-Programmcode-Komponente bereitgestellten Funktionalität beim Programmieren in natürlicher Sprache eingegeben werden.

12. Verfahren nach einem der Ansprüche 1 bis 11, umfassend einen Schritt des Erzeugens einer neuen Zeichenketten-Programmcode-Komponente auf Basis mehrerer Zeichenketten-Programmcode-Komponenten aus der Mehrzahl der Zeichenketten-Programmcode-Komponenten, wobei

- eine neue Definitionszeichenkette für die neu zu erzeugende Zeichenketten-Programmcode-Komponente angegeben wird;
- die mehreren Zeichenketten-Programmcode-Komponenten mittels Eingebens der Programmierzeichenkette in natürlicher Sprache gemäß Anspruch 1 ausgewählt werden; und
- wobei ein neues Programmcodesegment für die neu zu erzeugende Zeichenketten-Programmcode-Komponente auf Basis eines im Schritt des Erzeugens des der Programmierzeichenkette zugeordneten Programms erzeugten Programmcodes erzeugt wird.

13. System (100), eingerichtet zum Programmieren in natürlicher Sprache, umfassend

- eine Mehrzahl von Zeichenketten-Programmcode-Komponenten (10, 10', 10"), wobei eine Zeichenketten-Programmcode-Komponente (10) jeweils umfasst:

- eine Definitionszeichenkette (12), die einen Ausdruck (13) in natürlicher Sprache umfasst,
- ein der Definitionszeichenkette (12) eindeutig zugeordnetes Programmcodesegment (14), welches eine dem Ausdruck (13) in natürlicher Sprache zugeordnete Funktionalität implementiert,

- eine Eingabeeinrichtung (240) zum Eingeben einer Programmierzeichenkette in natürlicher Sprache,
- eine Steuereinrichtung (260), welche eingerichtet ist, die Zeichenketten-Programmcode-Komponenten zu speichern und die eingegebene Programmierzeichenkette zu verarbeiten,

wobei die Steuereinrichtung weiter eingerichtet ist, zumindest eine der Zeichenketten-Programmcode-Komponenten (210) auszuwählen, wenn die eingegebene Programmierzeichenkette zumindest eine Teilzeichenkette der Definitionszeichenkette der Zeichenketten-Programmcode-Komponente umfasst; sowie

- einen Codegenerator (282) und einen Compiler (284), welche eingerichtet sind, ein der Programmierzeichenkette zugeordnetes Programm zu erzeugen auf Basis der Programmcodesegmente der zumindest einen ausgewählten Zeichenketten-Programmcode-Komponente.

14. System nach Anspruch 13, wobei zumindest eine der Zeichenketten-Programmcode-Komponenten (10) aus der Mehrzahl der Zeichenketten-Programmcode-Komponenten (10; 10'; 10") eine Methode (16) zur Parametereingabe umfasst, wobei das System eingerichtet ist, die Methode zur Parametereingabe bei einer Verarbeitung der Zeichenketten-Programmcode-Komponente durch eine Steuereinrichtung des Systems (100) aufzurufen, wodurch diese Zeichenketten-Programmcode-Komponente eingerichtet ist, eine Parametereingabe zu unterstützen, mittels welcher die durch das Programmcodesegment dieser Zeichenketten-Programmcode-Komponente bereitgestellte Funktionalität spezifiziert werden kann, wobei eine durch das Programmcodesegment (14) zumindest einer der Zeichenketten-Programmcode-Komponenten (10) aus der Mehrzahl der Zeichenketten-Programmcode-Komponenten bereitgestellte Funktionalität eingerichtet ist, wenn diese Funktionalität durch das System (100; 200) ausgeführt wird, einen Rückgabewert zu liefern, wobei dieser Rückgabewert vorzugsweise natürlichsprachlich annotiert ist, und wobei zumindest eine weitere Zeichenketten-Programmcode-Komponente aus der Mehrzahl der Zeichenketten-Programmcode-Komponenten eingerichtet ist, wenn die durch das Programmcodesegment dieser weiteren Zeichenketten-Programmcode-Komponente bereitgestellte Funktionalität durch das System ausgeführt wird, auf den Rückgabewert zuzugreifen, insbesondere als Parameter zum Spezifizieren der durch das Programmcodesegment dieser weiteren Zeichenketten-Programmcode-Komponente bereitgestellten Funktionalität, wobei der Zugriff auf den Rückgabewert auf Basis einer natürlichsprachlichen Annotation des Rückgabewerts erfolgen kann.

15. System (100) nach Anspruch 13 oder 14, wobei das System eingerichtet ist, mittels natürlicher Sprache gesteuert zu werden,
wobei das System (100) weiter eingerichtet ist, bei Empfangen einer Eingabezeichenkette, welche gemäß einem vorgegebenen Ähnlichkeitsmaß eine vorgegebene Ähnlichkeit zu der Definitionszeichenkette (12) aufweist, die durch das Programmcodesegment (14) implementierte Funktionalität auszuführen, umfassend eine Steuereinrichtung (20), die eingerichtet ist

- eine Eingabezeichenkette zu empfangen, die einen Ausdruck in natürlicher Sprache umfasst,
- die Eingabezeichenkette mit der Definitionszeichenkette (12) einer Zeichenketten-Programmcode-Komponente (10) gemäß dem vorgegebenen Ähnlichkeitsmaß zu vergleichen, und
- eine durch das Programmcodesegment (14) implementierten Funktionalität auszuführen, falls die Eingabezeichenkette die vorgegebene Ähnlichkeit zu der Definitionszeichenkette (12) gemäß dem vorgegebenen Ähnlichkeitsmaß aufweist, wobei das System vorzugsweise ein Eingabegerät (50, 52), umfasst, welches eingerichtet ist, eine Nutzereingabe in natürlicher Sprache zu empfangen, daraus eine Eingabezeichenkette abzuleiten, die einen Ausdruck in natürlicher Sprache umfasst, und an die Steuereinrichtung (20) weiterzuleiten, oder eins ein Eingabegerät (40) umfasst, welches eingerichtet ist, ein Triggersignal zu empfangen, insbesondere ein mittels eines Sensors des Eingabegeräts (40) erfasstes Umgebungssignal, und in Reaktion auf das Triggersignal eine von dem Triggersignal abhängige Eingabezeichenkette abzuleiten, die einen Ausdruck in natürlicher Sprache umfasst, und an die Steuereinrichtung (20) weiterzuleiten, wobei das System vorzugsweise ein Ausgabegerät (50; 54) umfasst, welches eingerichtet ist, ein Ausgabesignal für einen Nutzer (42) in natürlicher Sprache auszugeben, um einen Dialog zwischen dem Nutzer (42) und einer Zeichenketten-Programmcode-Komponente (10) zu unterstützen, und wobei das System vorzugsweise ein Gerät (30; 32; 34; 36) umfasst, welches eingerichtet ist, mittels einer Funktionalität, die durch ein Programmcodesegment (14) einer Zeichenketten-Programmcode-Komponente (10) implementiert wird, gesteuert zu werden.

16. System (200) nach einem der Ansprüche 13 bis 15, eingerichtet zum Ausführen eines Verfahren nach einem der Ansprüche 1 bis 12, wobei die Eingabeeinrichtung (240) einen Editor (250) umfassen kann, welcher eingerichtet ist, die Programmierzeichenkette zu editieren, insbesondere mit Bezug auf eine Eingabe oder Auswahl von Parametern zum Spezifizieren der durch das Programmcodesegment einer ausgewählten Zeichenketten-Programmcode-Komponente bereitgestellten Funktionalität.

**Claims**

1. Method for programming in natural language, comprising the steps of:

   - providing (S1) a plurality of character string program code components (10, 10', 10") in a system (100), wherein a character string program code component (10) respectively comprises:

     - a definition character string (12) which comprises an expression (13) in natural language, and
     - a program code segment (14) that is unambiguously assigned to the definition character string (12) and that implements a functionality assigned to the expression (13) in natural language,

   - inputting (S602) a programming character string in natural language;
   - selecting (S603) at least one character string program code component (210) from the plurality of character string program code components if the programming character string comprises at least one character substring of the definition character string of the at least one character string program code component;
   - creating (S604) a program assigned to the programming character string based on the program code segment of the at least one selected character string program code component.

2. Method according to claim 1, wherein several character string program code components from the plurality of character string program code components are selected if the programming character string comprises at least one character substring of the definition character string of each of the several selected character string program code components, and wherein a program assigned to the programming character string is created based on the program code segments of the several selected character string program code components.

3. Method according to claim 1 or 2, wherein at least one of the character string program code components from the plurality of character string program code components comprises a method (16) for parameter input which is called from a control device of the system (100) when processing the character string program code component by the system, as a result of which this character string program code component is configured to support a parameter input by means of which the functionality provided by the program code segment of this character string program code component can be specified, and wherein preferably a functionality provided by the program code segment of at least one of the character string program code components from the plurality of character string program code components supplies, if this functionality is executed by the system, a return value, wherein this return value is preferably annotated as natural language, and wherein at least one further character string program code component from the plurality of character string program code components accesses, if the functionality provided by the program code segment of this further character string program code component is executed by the system, the return value, particularly as a parameter for specifying the functionality provided by the program code segment of the further character string program code component, wherein the access to the return value can be made based on a natural language annotation of the return value.

4. Method according to claim 3, wherein the system (100) is configured to execute the functionality implemented by the program code segment (14) upon receiving an input character string which comprises a predefined similarity to the definition character string (12) according to a predefined similarity measure, wherein the program code segment (14) preferably implements a functionality for controlling a device (30; 32; 34; 36) coupled to the system (100), or wherein the program code segment (14) or the method for parameter input preferably implements a dialogue between the character string program code component (10) and a user (42).

5. Method according to claim 4, wherein, if the program code segment (14) or the method for parameter input implements a dialogue between the character string program code component (10) and a user (42), the dialogue of a parameter input serves for specifying the functionality implemented by the program code segment (14) or the dialogue supports a conversation between the user (42) and the character string program code component (10).

6. Method according to one of claims 1 to 5, wherein the program code segment (14) implements a functionality for transmitting an input character string to the system (100).

7. Method according to one of claims 1 to 6, comprising the further steps of:

- receiving (S2) an input character string by the system (100);
- comparing (S3) the input character string to the definition character string (12) according to the predefined similarity measure by the system (100); and
- executing (S4) the functionality implemented by the program code segment (14) by the system (100) if the input character string comprises the predefined similarity to the definition character string (12) according to the predefined similarity measure.

8. Method according to claim 7, comprising the further steps of:

- storing a received input character string;
- reading out the stored input character string for supporting the subsequent execution of a functionality implemented by a program code segment (14) of a character string program code component (10; 10'), wherein a received input character string is preferably stored within a character string program code component and is read out for supporting the subsequent execution of the functionality implemented by the program code segment (14) of the character string program code component (10; 10') by the character string program code component.

9. Method according to one of claims 7 or 8, comprising the further steps of:

- storing a received input character string;
- inferring a context information from the input character string using the functionality implemented by the program code segment; and
- storing the context information in the system.

10. Method according to one of claims 1 to 9, wherein a definable parameter type is assigned to a parameter by means of which the functionality provided by the program code segment of a character string program code component can be specified.

11. Method according to one of claims 1 to 10, wherein the program code segment of at least one of the character string program code components from the plurality of character string program code components implements a control structure controlling a sequence of a program, wherein the program code segment can implement a conditional statement, and wherein the condition defining the conditional statement is queried using the functionality implemented by the program code segment of the character string program code component, or wherein the program code segment implements a conditional statement, and wherein the condition defining the conditional statement is defined by at least one operator and at least one operand, and wherein the at least one operator and the at least one operand are preferably input as a parameter for specifying the functionality provided by the program code segment of the character string program code component when programming in natural language.

12. Method according to one of claims 1 to 11, comprising a step of creating a new character string program code component based on several character string program code components from the plurality of character string program code components, wherein

- a new definition character string for the character string program code component to be created newly is indicated;
- the several character string program code components are selected by inputting the programming character string in natural language according to claim 1; and
- wherein a new program code segment for the character string program code component to be created newly is created based on a program code created in the step of creating the program assigned to the programming character string.

13. System (100), configured for programming in natural language, comprising

- a plurality of character string program code components (10, 10', 10"), wherein a character string program code component (10) respectively comprises:

  - a definition character string (12) which comprises an expression (13) in natural language,
  - a program code segment (14) that is unambiguously assigned to the definition character string (12) and that implements a functionality assigned to the expression (13) in natural language,

- an input device (240) for inputting a programming character string in natural language,
- a control device (260) which is configured to store the character string program code component and to process the input programming character string,
wherein the control device is further configured to select at least one of the character string program code components (210) if the input programming character string comprises at least one character substring of the definition character string of the character string program code component; as well as

    - a code generator (282) and a compiler (284) which are configured to create a program assigned to the programming character string based on the program code segments of the at least one selected character string program code component.

**14.** System according to claim 13, wherein at least one of the character string program code components (10) from the plurality of character string program code components (10; 10', 10") comprises a method (16) for parameter input, wherein the system is configured to call the method for parameter input when processing the character string program code component by a control device of the system (100), as a result of which this character string program code component is configured to support a parameter input by means of which the functionality provided by the program code segment of this character string program code component can be specified, wherein a functionality provided by the program code segment (14) of at least one of the character string program code components (10) from the plurality of character string program code components is configured, if this functionality is executed by the system (100; 200), to supply a return value, wherein this return value is preferably annotated as natural language, and wherein at least one further character string program code component from the plurality of character string program code components is configured, if the functionality provided by the program code segment of this further character string program code component is executed by the system, to access the return value, particularly as a parameter for specifying the functionality provided by the program code segment of this further character string program code component, wherein the access to the return value can be made based on a natural language annotation of the return value.

**15.** System (100) according to claim 13 or 14, wherein the system is configured to be controlled by natural language, wherein the system (100) is further configured, upon receiving an input character string which comprises a predefined similarity to the definition character string (12) according to a predefined similarity measure, to execute the functionality implemented by the program code segment (14), comprising a control device (20) configured

    - to receive an input character string which comprises an expression in natural language,
    - to compare the input character string to the definition character string (12) of a character string program code component (10) according to the predefined similarity measure, and
    - to execute a functionality implemented by the program code segment (14) if the input character string comprises the predefined similarity to the definition character string (12) according to the predefined similarity measure, wherein the system preferably comprises an input device (50, 52) configured to receive a user input in natural language, to infer from this an input character string that comprises an expression in natural language and to forward it to the control device (20), or comprises an input device (40) configured to receive a trigger signal, particularly an environment signal detected using a sensor of the input device (40), and, in response to the trigger signal, to infer an input character string depending on the trigger signal which comprises an expression in natural language and to forward it to the control device (20), wherein the system preferably comprises an output device (50; 54) configured to output an output signal for a user (42) in natural language in order to support a dialogue between the user (42) and a character string program code component (10), and wherein the system preferably comprises a device (30; 32; 34; 36) configured to be controlled by a functionality that is implemented by a program code segment (14) of a character string program code component (10).

**16.** System (200) according to one of claims 13 to 15, configured for executing a method according to one of claims 1 to 12, wherein the input device (240) can comprise an editor (250) configured to edit the programming character string, particularly regarding an input or a selection of parameters for specifying the functionality provided by the program code segment of a selected character string program code component.

**Revendications**

**1.** Procédé de programmation en langage naturel, comprenant les étapes suivantes:

- fournir (S1) une pluralité de composants de code de programme de chaînes de caractères (10, 10', 10") dans un système (100), chaque composant de code de programme de chaînes de caractères (10) comprenant :

- une chaîne de caractères de définition (12) qui comprend une expression (13) en langage naturel, et
- un segment de code de programme (14) qui est associé explicitement à la chaîne de caractères de définition (12) et qui implémente une fonctionnalité associée à l'expression (13) en langage naturel,

- entrer (S602) une chaîne de caractères de programmation en langage naturel ;
- sélectionner (S603) au moins un composant de code de programme de chaînes de caractères (210) parmi la pluralité des composants de code de programme de chaînes de caractères si la chaîne de caractères de programmation comprend au moins une sous-chaîne de caractères de la chaîne de caractères de définition de l'au moins un composant de code de programme de chaînes de caractères ;
- générer (S604) un programme associé à la chaîne de caractères de programmation sur la base du segment de code de programme de l'au moins un composant de code de programme de chaînes de caractères sélectionné.

2. Procédé selon la revendication 1, dans lequel plusieurs composants de code de programme de chaînes de caractères parmi la pluralité des composants de code de programme de chaînes de caractères sont sélectionnés si la chaîne de caractères de programmation comprend au moins une sous-chaîne de caractères de la chaîne de caractères de définition de chacun des plusieurs composants de code de programme de chaînes de caractères sélectionnés, et dans lequel un programme associé à la chaîne de caractères de programmation est généré sur la base des segments de code de programme des plusieurs composants de code de programme de chaînes de caractères sélectionnés.

3. Procédé selon la revendication 1 ou 2, dans lequel au moins un des composants de code de programme de chaînes de caractères parmi la pluralité des composants de code de programme de chaînes de caractères comprend un procédé (16) d'entrée de paramètres qui est appelé depuis un dispositif de commande du système (100) lors du traitement du composant de code de programme de chaînes de caractères par le système, en conséquence de quoi ce composant de code de programme de chaînes de caractères est configuré pour supporter une entrée de paramètres au moyen de laquelle la fonctionnalité fournie par le segment de code de programme de ce composant de code de programme de chaînes de caractères peut être spécifiée, et dans lequel de préférence une fonctionnalité fournie par le segment de code de programme d'au moins un des composants de code de programme de chaînes de caractères parmi la pluralité des composants de code de programme de chaînes de caractères fournit une valeur de retour si cette fonctionnalité est exécutée par le système, cette valeur de retour étant de préférence annotée en langage naturel, et au moins un autre composant de code de programme de chaînes de caractères parmi la pluralité des composants de code de programme de chaînes de caractères accédant à la valeur de retour si la fonctionnalité fournie par le segment de code de programme de cet autre composant de code de programme de chaînes de caractères est exécutée par le système, en particulier en tant que paramètre pour spécifier la fonctionnalité fournie par le segment de code de programme de l'autre composant de code de programme de chaînes de caractères, l'accès à la valeur de retour pouvant être effectué sur la base d'une annotation en langage naturel de la valeur de retour.

4. Procédé selon la revendication 3, dans lequel le système (100) est configuré pour exécuter la fonctionnalité implémentée par le segment de code de programme (14) lors de la réception d'une chaîne de caractères d'entrée qui présente une similitude prédéfinie avec la chaîne de caractères de définition (12) selon une mesure de similitude prédéfinie, le segment de code de programme (14) implémentant de préférence une fonctionnalité destinée à commander un dispositif (30 ; 32 ; 34 ; 36) couplé au système (100), ou le segment de code de programme (14) ou le procédé d'entrée de paramètres implémentant de préférence un dialogue entre le composant de code de programme de chaînes de caractères (10) et un utilisateur (42).

5. Procédé selon la revendication 4, dans lequel, si le segment de code de programme (14) ou le procédé d'entrée de paramètres implémente un dialogue entre le composant de code de programme de chaînes de caractères (10) et un utilisateur (42), le dialogue d'une entrée de paramètres sert à spécifier la fonctionnalité implémentée par le segment de code de programme (14) ou le dialogue supporte une conversation entre l'utilisateur (42) et le composant de code de programme de chaînes de caractères (10).

6. Procédé selon l'une des revendications 1 à 5, dans lequel le segment de code de programme (14) implémente une fonctionnalité destinée à transmettre une chaîne de caractères d'entrée au système (100).

**7.** Procédé selon l'une des revendications 1 à 6, comprenant les étapes supplémentaires suivantes :

- recevoir (S2) une chaîne de caractères d'entrée par le système (100) ;
- comparer (S3) la chaîne de caractères d'entrée à la chaîne de caractères de définition (12) selon la mesure de similitude prédéfinie par le système (100) ; et
- exécuter (S4) la fonctionnalité implémentée par le segment de code de programme (14) par le système (100) si la chaîne de caractères d'entrée présente la similitude prédéfinie avec la chaîne de caractères de définition (12) selon la mesure de similitude prédéfinie.

**8.** Procédé selon la revendication 7, comprenant les étapes supplémentaires suivantes :

- stocker une chaîne de caractères d'entrée reçue ;
- lire la chaîne de caractères d'entrée stockée pour supporter l'exécution subséquente d'une fonctionnalité implémentée par un segment de code de programme (14) d'un composant de code de programme de chaînes de caractères (10 ; 10'), une chaîne de caractères d'entrée reçue étant de préférence stockée dans un composant de code de programme de chaînes de caractères et étant lue pour supporter l'exécution ultérieure de la fonctionnalité implémentée par le segment de code de programme (14) du composant de code de programme de chaînes de caractères (10 ; 10') par le composant de code de programme de chaînes de caractères.

**9.** Procédé selon l'une des revendications 7 ou 8, comprenant les étapes supplémentaires suivantes :

- stocker une chaîne de caractères d'entrée reçue ;
- déduire une information de contexte à partir de la chaîne de caractères d'entrée en utilisant la fonctionnalité implémentée par le segment de code de programme ; et
- stocker les informations de contexte dans le système.

**10.** Procédé selon l'une des revendications 1 à 9, dans lequel un type de paramètre définissable est associé à un paramètre par lequel la fonctionnalité fournie par le segment de code de programme d'un composant de code de programme de chaînes de caractères peut être spécifiée.

**11.** Procédé selon l'une des revendications 1 à 10, dans lequel le segment de code de programme d'au moins un des composants de code de programme de chaînes de caractères parmi la pluralité des composants de code de programme de chaînes de caractères implémente une structure de commande commandant une séquence d'un programme, le segment de code de programme pouvant implémenter une instruction conditionnelle, la condition définissant l'instruction conditionnelle étant extraite en utilisant la fonctionnalité implémentée par le segment de code de programme du composant de code de programme de chaînes de caractères, ou dans lequel le segment de code de programme implémente une instruction conditionnelle, et la condition définissant l'instruction conditionnelle étant définie par au moins un opérateur et au moins un opérande, et l'au moins un opérateur et l'au moins un opérande étant de préférence entrés en tant que paramètre pour spécifier la fonctionnalité fournie par le segment de code de programme du composant de code de programme de chaînes de caractères lors de la programmation en langage naturel.

**12.** Procédé selon l'une des revendications 1 à 11, comprenant une étape de génération d'un nouveau composant de code de programme de chaînes de caractères sur la base de plusieurs composants de code de programme de chaînes de caractères parmi la pluralité des composants de code de programme de chaînes de caractères, dans lequel

- une nouvelle chaîne de caractères de définition est indiquée pour le composant de code de programme de chaînes de caractères à générer nouvellement ;
- les plusieurs composants de code de programme de chaînes de caractères sont sélectionnés en entrant la chaîne de caractères de programmation en langage naturel selon la revendication 1 ; et
- un nouveau segment de code de programme pour le composant de code de programme de chaînes de caractères à générer nouvellement étant généré sur la base d'un code de programme généré dans l'étape de génération du programme associé à la chaîne de caractères de programmation.

**13.** Système (100), configuré pour la programmation en langage naturel, comprenant

- une pluralité de composants de code de programme de chaînes de caractères (10, 10', 10"), chaque composant de code de programme de chaînes de caractères (10) comprenant :

- une chaîne de caractères de définition (12) qui comprend une expression (13) en langage naturel,
- un segment de code de programme (14) qui est associé explicitement à la chaîne de caractères de définition (12) et qui implémente une fonctionnalité associée à l'expression (13) en langage naturel,
- un dispositif d'entrée (240) destiné à entrer une chaîne de caractères de programmation en langage naturel,
- un dispositif de commande (260) configuré pour stocker les composants de code de programme de chaînes de caractères et pour traiter la chaîne de caractères de programmation entrée,

le dispositif de commande étant configuré en outre pour sélectionner au moins l'un des composants de code de programme de chaînes de caractères (210) si la chaîne de caractères de programmation entrée comprend au moins une sous-chaîne de caractères de la chaîne de caractères de définition du composant de code de programme de chaînes de caractères, ainsi que

- un générateur de code (282) et un compilateur (284) configurés pour générer un programme associé à la chaîne de caractères de programmation sur la base des segments de code de programme de l'au moins un composant de code de programme de chaînes de caractères sélectionné.

14. Système selon la revendication 13, dans lequel au moins un des composants de code de programme de chaînes de caractères (10) de la pluralité des composants de code de programme de chaînes de caractères (10 ; 10', 10") comprend un procédé (16) d'entrée de paramètres, le système étant configuré pour appeler le procédé d'entrée de paramètres lors d'un traitement du composant de code de programme de chaînes de caractères par un dispositif de commande du système (100), en conséquence de quoi ce composant de code de programme de chaînes de caractères est configuré pour supporter une entrée de paramètres au moyen de laquelle la fonctionnalité fournie par le segment de code de programme de ce composant de code de programme de chaînes de caractères peut être spécifiée, une fonctionnalité fournie par le segment de code de programme (14) d'au moins un des composants de code de programme de chaînes de caractères (10) parmi la pluralité des composants de code de programme de chaînes de caractères étant configurée, si cette fonctionnalité est exécutée par le système (100 ; 200), pour fournir une valeur de retour, cette valeur de retour étant de préférence annotée en langage naturel, et au moins un autre composant de code de programme de chaînes de caractères parmi la pluralité des composants de code de programme de chaînes de caractères est configuré, si la fonctionnalité fournie par le segment de code de programme de cet autre composant de code de programme de chaînes de caractères est exécutée par le système, pour accéder à la valeur de retour, en particulier en tant que paramètre pour spécifier la fonctionnalité fournie par le segment de code de programme de cet autre composant de code de programme de chaînes de caractères, l'accès à la valeur de retour pouvant être effectué sur la base d'une annotation en langage naturel de la valeur de retour.

15. Système (100) selon la revendication 13 ou 14, dans lequel le système est configuré pour être commandé par langage naturel, dans lequel le système (100) est en outre configuré, lors de la réception d'une chaîne de caractères d'entrée qui présente une similitude prédéfinie avec la chaîne de caractères de définition (12) selon une mesure de similitude prédéfinie, pour exécuter la fonctionnalité implémentée par le segment de code de programme (14), comprenant un dispositif de commande (20) configuré

- pour recevoir une chaîne de caractères d'entrée comprenant une expression en langage naturel,
- pour comparer la chaîne de caractères d'entrée à la chaîne de caractères de définition (12) d'un composant de code de programme de chaînes de caractères (12) selon la mesure de similitude prédéfinie, et
- pour exécuter une fonctionnalité implémentée par le segment de code de programme (14) si la chaîne de caractères d'entrée présente la similitude prédéfinie avec la chaîne de caractères de définition (12) selon la mesure de similitude prédéfinie, le système comprenant de préférence un dispositif d'entrée (50, 52) configuré pour recevoir une entrée utilisateur en langage naturel, pour déduire de celle-ci une chaîne de caractères d'entrée qui comprend une expression en langage naturel et pour la transmettre au dispositif de commande (20), ou comprenant un dispositif d'entrée (40) configuré pour recevoir un signal de déclenchement, en particulier un signal d'environnement détecté au moyen d'un capteur du dispositif d'entrée (40), et, en réponse au signal de déclenchement, pour déduire une chaîne de caractères d'entrée en fonction du signal de déclenchement qui comprend une expression en langage naturel, et pour la transmettre au dispositif de commande (20), le système comprenant de préférence un dispositif de sortie (50 ; 54) configuré pour délivrer un signal de sortie pour un utilisateur (42) en langage naturel afin de supporter un dialogue entre l'utilisateur (42) et un composant de code de programme de chaînes de caractères (10), et le système comprenant de préférence un dispositif (30 ; 32 ; 34 ; 36) configuré pour être commandé par une fonctionnalité qui est implémentée par un segment de code de programme (14) d'un composant de code de programme de chaînes de caractères (10).

16. Système (200) selon l'une des revendications 13 à 15, configuré pour exécuter un procédé selon l'une des revendications 1 à 12, dans lequel le dispositif d'entrée (240) peut comprendre un éditeur (250) configuré pour éditer la chaîne de caractères de programmation, en particulier par rapport à une entrée ou une sélection de paramètres pour spécifier la fonctionnalité fournie par le segment de code de programme d'un composant de code de programme de chaînes de caractères.

13

„ ... "

12

16

10

(...)

{...}

14

Fig.1

42

100

52

50

30

54

32

10

10"

10'

36

24

22

20

40

34

Fig.2

S1

S2

S3

S4

Fig.3

T1

TS2.1

T2

TS2.2

T3

Fig.4

200

260

240

282

250

270

284

210

30

210'    210''

Fig. 5

S601

S602

S603

S604

Fig. 6

**IN DER BESCHREIBUNG AUFGEFÜHRTE DOKUMENTE**

**In der Beschreibung aufgeführte Patentdokumente**

- US 6374226 B1

**In der Beschreibung aufgeführte Nicht-Patentliteratur**

- **VON MICHAEL F. MCTEAR.** *Spoken dialogue technology,* ISSN 0360-0300